(19) **Europäisches Patentamt / European Patent Office / Office européen des brevets**

(11) **EP 1 717 981 B1**

(12) **EUROPEAN PATENT SPECIFICATION**

(45) Date of publication and mention
of the grant of the patent:
**27.02.2013 Bulletin 2013/09**

(51) Int Cl.:
*H04L 1/00* (2006.01)   *H04L 1/18* (2006.01)

(21) Application number: **05388037.3**

(22) Date of filing: **27.04.2005**

(54) **Block size control**

Blockgrössenkontrolle

Contrôle de la taille d'un bloc

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**02.11.2006 Bulletin 2006/44**

(73) Proprietor: **Telefonaktiebolaget LM Ericsson (publ)**
**164 83 Stockholm (SE)**

(72) Inventors:
• **Wintzell, Ola Erik Kristoffer**
**247 91 Södra Sandby (SE)**

• **Andersson, Lennart**
**226 97 Hjärnarp (SE)**

(74) Representative: **Åkerman, Mårten Lennart**
**Ericsson AB**
**Patent Unit Lund**
**221 83 Lund (SE)**

(56) References cited:
**US-A- 3 878 333      US-A- 4 691 314**
**US-A1- 2002 089 935**

## Description

FIELD OF THE INVENTION:

The invention relates to the control of the block size of data blocks to be transmitted from a transmitter to a receiver via a communications link.

BACKGROUND OF THE INVENTION:

Typical sources of transmission errors in communications networks include the transmission medium and impairments in the receiver, the transmitter, and/or a communications channel due to noise and interference.

In communications systems with variable block sizes, such as automatic repeat request (ARQ) transmission systems, such errors are managed by packetizing the transmitted data, detecting transmission errors, and requesting retransmission of packets that have not been successfully received. Hence, in such a system data is transmitted in the form of data blocks or packets, each data block including a certain number of data bits. The number of bits included in a data block is denoted the block size of that data block. Typically, upon receipt of a data block, the receiver returns a so-called ACK/NACK flag indicating whether or not the receiver acknowledges error-free receipt of the data block.

The effect of the block size on the throughput of the communications system may be described with reference to the available transmit energy per information bit ($E_b$). The throughput of such an ARQ protocol depends on a variety of parameters, including the block size, i.e. the amount of data to be sent at one time, e.g. during each transmission time interval. If error control is used, the corresponding error codes are typically added before interleaving and returned to the transmitter. In particular, for a fixed power level (or energy per chip, $E_c$) a smaller block corresponds to a higher energy per information bit ($E_b$) than a larger block. Consequently, small block sizes result in a small number of transmitted data bits, while large block sizes result in more block errors. Consequently, it is desirable to adjust the block size of an ARQ system as to optimize the throughput on an ARQ controlled link.

Hence, it is a general problem, based on knowledge of the ACK's and NACK's and potential side-information, e.g., receiver SIR, of the previously transmitted packets, to select the transport block size, i.e., the number of information bits that should be relayed in the next transmission time interval (TTI).

US patent no. 3,878,333 discloses a simplex ARQ system for data transmission circuits using a short wave circuit. This prior art system performs retransmissions of transmitted blocks in case of transmission errors. Furthermore, the length of the transmitted blocks is changed according to the instantaneous quality of the short wave circuit. US patent application no. 2002/0089935 discloses methods and apparatuses for varying the size of a radiolink protocol packet based channel condition estimation.

The article "ARQ protocols with adaptive block size perform better over a wide range of bit error rates" by Joaquim Arnaldo C. Martins and Jorge de Carvalho Alves, IEEE Transactions on Communications, vol. 38, no. 6, June 1990, discloses an adaptive scheme for adjusting the block size depending on the channel conditions.

Even though the above prior art method provides an improved bit error rate, it remains a problem to further improve the block size control as to provide a high throughput and a high reliability.

SUMMARY OF THE INVENTION:

According to one aspect, the above and other problems are solved by a method of controlling a block size of data blocks to be transmitted from a transmitter to a receiver via a communications link, the method comprising determining an adjusted block size based on at least one indication indicating whether a previously transmitted data block with a current block size was successfully received by the receiver; wherein determining the adjusted block size comprises

- transmitting a number of data blocks having respective current block sizes, wherein each current block size is selected from at least two previously determined candidate block sizes;
- determining at least one adjusted candidate block size from a number of indications, each indication indicating whether a corresponding one of the transmitted data blocks was successfully received by the receiver; and
- replacing at least one of the previously determined candidate block sizes with the determined at least one adjusted candidate block size.

In particular, by transmitting data blocks with different candidate block sizes and receiving ACK/NACK indications corresponding to those different block sizes, several candidate block sizes are actually probed for the current channel conditions, thereby allowing a continuous evaluation of different possible block sizes and selection of the most optimal block size under the given channel conditions.

Furthermore, since the block size control is based on actual measurements of the number of ACK/NACK indications for different alternative block sizes, an accurate block size control is provided without depending on potentially inaccurate a priori assumptions and or estimates of e.g. the signal to interference ratio that may cause the control to give erroneous results.

Furthermore, it is an advantage that the block size control described herein does not require a model of the channel conditions.

It is a further advantage that the block size control described herein automatically adjusts to changing channel conditions.

In some embodiments of the invention, replacing at least one of the previously determined candidate block sizes with the determined at least one adjusted candidate block size is conditioned on the determined at least one adjusted candidate block size resulting in a higher estimated throughput than at least one of the previously determined candidate block sizes. In particular, when the previously determined candidate block sizes provide the highest throughput rates or when a replacement would not result in an improvement of the estimated throughput rate, an adjustment/replacement of the probed block sizes may be omitted. Furthermore, the replacement of a previously determined candidate block size by an adjusted candidate block size may be conditioned on additional or alternative conditions, e.g. that the adjusted candidate block size is different from the previously determined candidate block sizes.

According to another embodiment, an efficient determination of an initial block size is achieved when the method further comprises determining an initial primary block size by

- transmitting at least a first data block with an initial candidate block size;
- retransmitting at least one data block obtained from at least the first data block until the at least one data block has been received correctly by the receiver;
- determining the initial primary block size from a quantity indicative of the amount of data transmitted during the retransmissions.

Hence, an alternative procedure for determining an initial block size is provided that takes retransmissions into account. The at least one data block obtained from at least the first data block may be identical to the first data block. In other embodiments, the at least one data block obtained from at least the first data block may be determined according to a suitable retransmission scheme, e.g. employing an incremental redundancy coding scheme. Examples of the quantity indicative of the amount of data transmitted during the retransmissions include the number of retransmissions, the number of bits transmitted during the retransmissions, or the like.

According to another aspect, the above and other problems are solved by a method of determining a suitable block size of data blocks to be transmitted from a transmitter to a receiver via a communications link, the method comprising

- transmitting one or more data blocks with respective block sizes selected from a predetermined sequence of block sizes until at least one of the one or more data blocks is successfully received; wherein a smaller block size is selected from said sequence for the transmission of a subsequent data block responsive to a previous one of the one or more data blocks not having been successfully received by the receiver; and
- selecting as a suitable block size the block size of a data block that was successfully received by the receiver;

wherein the method further comprises

- determining said predetermined sequence of block sizes by means of an iterative process, wherein during each iteration a subsequent block size is determined as a block size that maximises an average likelihood throughput calculated from at least one block size determined during at least one previous iteration.

Hence, a high throughput and a high reliability are already obtained after a few transmission attempts. In particular, by determining the subsequent block size at each iteration as a block size that maximises an average likelihood throughput calculated from the previously determined block sizes, the above method provides an optimal or at least close to optimal selection of a block size in a short number of transmission attempts, thereby reducing the time required to reach an optimal or at least near-optimal throughput.

It is an advantage of the initialisation methods described herein that the selection of the sizes of the initial blocks is performed efficiently and reliably, even when no or only a limited amount of prior information is available.

The data to be transmitted is processed before transmission, e.g. encoded, interleaved, rate matched, modulated, and/or the like. The encoding may include Turbo encoding, convolutional encoding, and/or the like. The modulation may include any suitable modulation scheme, e.g. using Phase Shift Keying (PSK), such as Binary Phase Shift Keying (BPSK), Quadrature Phase Shift Keying (QPSK), 8-PSK, etc., Quadrature Amplitude Modulation techniques (QAM), Continuous Phase Modulation (CPM), or the like.

In some embodiments, the indication indicating whether a corresponding data block was successfully received by the receiver is generated by the receiver. Nevertheless, the block size control unit performing the block size control described herein may be located in the transmitter or in the receiver. In an embodiment where the block size control unit is located in the transmitter, the receiver sends the indication to the transmitter, e.g. as an ACK/NACK flag, e.g. a binary indication, or any other suitable form of indication. In an embodiment where the block size control unit is located in the receiver, the block size control unit may send a resulting block size to the transmitter to cause the transmitter to use that block size for subsequent transmissions. Furthermore, in some embodiments, the block size control may be distributed between the transmitter and the receiver. For example, the receiver may select a set of block sizes on a slow time scale, while the transmitter selects the exact block size from that set on a fast time scale.

In one embodiment, the at least two candidate block sizes comprise a primary block size and one or more alternative block sizes; and the current block size is selected to be equal to the primary block size more frequently than to be equal to each of the one or more alternative block sizes. In particular, when the primary block size is the block size that provides the best estimated transmission performance and when this block size is used more frequently than the alternative block sizes, a probing of alternative block sizes is achieved while reducing the decrease of the overall performance due to the use of non-optimal block sizes.

In particular, when the method further comprises determining, from respective expected throughput rates for the primary block size and the one or more alternative block sizes, a relative frequency with which the primary block size is selected relative to the one or more alternative block sizes, a fast detection of changes in the transmission conditions is combined with a high average throughput rate, e.g. measured as the successfully transmitted number of data bits per unit time.

In one embodiment, determining at least one adjusted candidate block size comprises

- determining an adjusted primary block size from the one or more indications; and
- determining one or more adjusted alternative block sizes from the determined adjusted primary block size.

Hence, the primary block size may be adjusted to correspond to the estimated optimal block size under the current channel conditions, while one or more alternative, typically sub-optimal, block sizes are probed, in order to efficiently detect a situation when it is advantageous to change the primary block size.

In particular, in one embodiment, determining the adjusted primary block size comprises

- determining respective effective throughput rates for the transmitted data blocks of each of the candidate block sizes; and
- determining the adjusted primary block size as one of the candidate block sizes that corresponds to the highest of the determined effective throughput rates.

Consequently, the primary block size is selected as to maximise the estimated throughput, thereby directly optimising the throughput of the system.

In one embodiment, determining respective effective throughput rates comprises

- determining respective block error rates for the transmitted data blocks of each of the candidate block sizes from said indications; and
- determining respective throughput rates from the block error rates and the corresponding candidate block sizes.

Hence, an efficient and accurate estimate of the throughput is provided based on the history of ACK/NACK only.

When the one or more alternative block sizes comprise a smallest block size smaller than the primary block size and a largest block size larger than the primary block size, both a higher and a lower alternative block size are compared to the current primary block size, thereby determining whether an increase or a decrease of the block size would result in an improvement compared to the present performance. The difference between the primary and the alternative block sizes may be selected more or less big. For example, given a sequence of discrete block sizes that are available in a given system, the smallest and largest block size may be selected to be the nearest neighbours of the primary block size, or they may be selected to be the next-nearest neighbours or even further apart from the primary block size, depending on the desired step size of the control mechanism and the number of alternative block sizes to be probed. In particular, when the at least two candidate block sizes are determined from a sequence of possible block sizes, and when the smallest block size and the largest block size are selected to be adjacent block sizes to the primary block size within said sequence, a fine tuning of the block size is provided with the smallest possible step size.

For the initial blocks sent over a channel, no prior information of the quality of the channel is available. In one embodiment of the invention, an initial value of the primary block size is obtained by determining an initial primary block size by

- transmitting one or more data blocks with respective block sizes selected from a predetermined sequence of block sizes until at least one of the one or more data blocks is successfully received by the receiver; wherein a smaller block size is selected from said sequence for the transmission of a subsequent data block responsive to a previous one of the one or more data blocks not having been successfully received by the receiver; and

- selecting the initial primary block size to be the block size of a data block that was successfully received by the receiver.

When the method further comprises determining said predetermined sequence of block sizes by means of an iterative process, wherein during each iteration a subsequent block size is determined as a block size that maximises an average likelihood throughput calculated from at least one block size determined during at least one previous iteration, a particularly efficient method of determining an initial block size is provided, since a reasonable block size is obtained already after a few transmission attempts. The sequence of block sizes, while block errors occur, can be pre-computed and stored in a table, e.g. for at least one of a predetermined assumed channel and predetermined assumed channel conditions. In yet another embodiment, the method further comprises pre-calculating and storing at least two sequences of block sizes; wherein each pre-calculated sequence is calculated for at least one of a different assumed channel and different assumed channel conditions.

In another embodiment, the subsequent block size $N_n$ in the n-th iteration of the iterative process is determined from the block sizes $N_1, ..., N_{n-1}$ determined in the n-1 previous iterations, from a predetermined distribution P(SNR) of the signal to noise ratio SNR, from respective probabilities $p_B(SNR,N_j)$, $j \in \{1,...,n-1\}$ of receiving an indication that a data block of size $N_j$ was not successfully received given a signal to noise ratio SNR, and from the expected throughput rate R(SNR,N) as a function of signal to noise ratio SNR and block size N, according to

$$N_n = \operatorname*{argmax}_{N} \int_0^\infty P(SNR) R(SNR,N) \left( \prod_{j=1}^{n-1} p_B(SNR,N_j) \right) dSNR \,.$$

In yet another embodiment, the sequence of block sizes comprises less than 10 different block sizes preferably less than 7, more preferably between 4 and 5 block sizes.

In yet another embodiment, the method further comprises adjusting the determined block size during transmission of subsequent data blocks by performing the following steps:

- transmitting a number of data blocks having respective current block sizes, wherein each current block size is selected from at least two previously determined candidate block sizes;
- determining at least one adjusted candidate block size from a number of indications, each indication indicating whether a corresponding one of the transmitted data blocks was successfully received; and
- replacing at least one of the previously determined candidate block sizes with the determined at least one adjusted candidate block size.

The present invention relates to different aspects including the methods described above and in the following, corresponding devices, and computer programs, each yielding one or more of the benefits and advantages described in connection with the above-mentioned methods, and each having one or more embodiments corresponding to the embodiments described in connection with the above-mentioned methods.

In particular, according to the first aspect, a control device for controlling a block size of data blocks to be transmitted by a transmitter unit to a receiver via a communications link is adapted to determine an adjusted block size based on at least one indication indicating whether a previously transmitted data block with a current block size was successfully received by the receiver; and to

- cause the transmitter unit to transmit a number of data blocks having respective current block sizes, wherein the control means is adapted to select each current block size from at least two previously determined candidate block sizes;
- to determine at least one adjusted candidate block size from a number of indications, each indication indicating whether a corresponding one of the transmitted data blocks was successfully received; and
- to replace at least one of the previously determined candidate block sizes with the determined at least one adjusted candidate block size.

According to the second aspect, a control device for controlling a block size of data blocks to be transmitted by a transmitter unit to a receiver via a communications link comprises an initialisation unit for determining a suitable block size, and storage means for storing a sequence of available block sizes, wherein the control device is adapted to

- cause the transmitter unit to transmit one or more data blocks with respective block sizes selected from a said sequence of block sizes until at least one of the one or more data blocks is successfully received by the receiver; wherein the initialisation unit is adapted to select a smaller block size from said sequence for the transmission of a subsequent data block responsive to a previous one of the one or more data blocks not having been successfully received by the receiver; and
- to select as suitable block size the block size of a data block that was successfully received by the receiver;

wherein the initialisation unit is adapted to select said respective smaller block sizes from a predetermined subset of said stored sequence of block sizes, wherein each smaller block size is determined as a block size that maximises an average likelihood throughput calculated from a previous block size of said subset.

For the purpose of the present description, the term storage means is intended to comprise any suitable storage device or circuit, e.g. a read-only-memory (ROM), a random access memory (RAM), a flash memory, an Erasable Programmable Read-Only Memory (EPROM), volatile or nonvolatile memory, or the like.

According to one embodiment, the at least two candidate block sizes comprise a primary block size and one or more alternative block sizes; and the control device comprises a selector unit adapted to select the current block size to be equal to the primary block size more frequently than to be equal to each of the one or more alternative block sizes.

According to another embodiment, the selector unit is adapted to determine, from respective expected throughput rates for the primary block size and the one or more alternative block sizes, a relative frequency with which the primary block size is selected relative to the one or more alternative block sizes.

According to yet another embodiment, the control device comprises an optimizer unit adapted to determine an adjusted primary block size from the one or more indications, and to determine one or more adjusted alternative block sizes from the determined adjusted primary block size.

According to yet another embodiment, the control device comprises at least one rate evaluation unit adapted to determine respective effective throughput rates for the transmitted data blocks of each of the candidate block sizes; and the optimizer unit is adapted to determine the adjusted primary block size as one of the candidate block sizes corresponding to the highest of the determined effective throughput rates.

According to yet another embodiment, the at least one rate evaluation unit is adapted to determine respective block error rates for the transmitted data blocks of each of the candidate block sizes from the indications, and to determine respective throughput rates from the block error rates and the corresponding candidate block sizes.

According to yet another embodiment, the one or more alternative block sizes comprise a smallest block size smaller than the primary block size and a largest block size larger than the primary block size.

According to yet another embodiment, the control device is adapted to determine the at least two candidate block sizes from a sequence of possible block sizes, and to select the smallest block size and the largest block size to be adjacent block sizes to the primary block size within said sequence.

As mentioned above, in some embodiments the control device comprises an initialisation unit for determining an initial primary block size, wherein the initialisation unit is adapted

- to cause the transmitter unit to transmit one or more data blocks with respective block sizes selected from a predetermined sequence of block sizes until at least one of the one or more data blocks is successfully received by the receiver; wherein a smaller block size is selected from said sequence for the transmission of a subsequent data block responsive to a previous one of the one or more data blocks not having been successfully received by the receiver; and
- to select the initial primary block size to be the block size of a data block that was successfully received by the receiver.

According to one embodiment, the initialisation unit is adapted to determine said predetermined sequence of block sizes by means of an iterative process, wherein during each iteration a subsequent block size is determined as a block size that maximises an average likelihood throughput calculated from at least one block size determined during at least one previous iteration.

According to yet another embodiment, the control device comprises storage means for storing a pre-calculated sequence of block sizes for at least one of a predetermined assumed channel and predetermined assumed channel conditions. According to yet another embodiment, the storage means is adapted to store at least two pre-calculated sequences of block sizes; wherein each pre-calculated sequence is calculated for at least one of a different assumed channel and different assumed channel conditions.

According to yet another embodiment, the subsequent block size $N_n$ in the n-th iteration of the iterative process is determined from the block sizes $N_1, ..., N_{n-1}$ determined in the n-1 previous iterations, from a predetermined distribution P(SNR) of the signal to noise ratio SNR, from respective probabilities $p_B(SNR,N_j)$, $j \in \{1,...,n-1\}$ of receiving an indication that a data block of size $N_j$ was not successfully received given a signal to noise ratio SNR, and from the expected throughput rate R(SNR,N) as a function of signal to noise ratio SNR and block size N, according to

$$N_n = \underset{N}{\text{argmax}} \int_0^\infty P(SNR)R(SNR,N)\left(\prod_{j=1}^{n-1} p_B(SNR,N_j)\right)dSNR.$$

According to yet another embodiment, the sequence of block sizes comprises less than 10 different block sizes preferably less than 7, more preferably between 4 and 5 block sizes.

According to yet another embodiment, the control device further comprises an initialisation unit adapted to determine an initial primary block size by

- causing the transmitter unit to transmit at least a first data block with an initial candidate block size, and to retransmit at least one data block obtained from at least the first data block until the at least one data block has been received correctly by the receiver;
- determining the initial primary block size from a quantity indicative of the amount of data transmitted during the retransmissions.

According to yet another embodiment, the control device is further adapted to adjust the determined block size during transmission of subsequent data blocks by performing the following steps:

- transmitting a number of data blocks having respective current block sizes, wherein each current block size is selected from at least two previously determined candidate block sizes;
- determining at least one adjusted candidate block size from a number of indications, each indication indicating whether a corresponding one of the transmitted data blocks was successfully received; and
- replacing at least one of the previously determined candidate block sizes with the determined at least one adjusted candidate block size.

According to another aspect, a transmitter unit comprises a control device as described above and in the following. The term transmitter unit is intended to comprise any electronic communications equipment for transmitting data via a communications channel, e.g. portable radio communications equipment, and other handheld or portable devices. The term portable radio communications equipment includes all equipment such as mobile terminals, e.g. mobile telephones, pagers, communicators, electronic organisers, smart phones, personal digital assistants (PDAs), handheld computers, or the like.

It is noted that the features of the methods described above and in the following may be implemented in software and carried out on a data processing device or other processing means caused by the execution of program code means such as computer-executable instructions. Here and in the following, the term processing means comprises any circuit and/or device suitably adapted to perform the above functions. In particular, the above term comprises general- or special-purpose programmable microprocessors, Digital Signal Processors (DSP), Application Specific Integrated Circuits (ASIC), Programmable Logic Arrays (PLA), Field Programmable Gate Arrays (FPGA), special purpose electronic circuits, etc., or a combination thereof.

Hence, according to another aspect, a computer program comprises program code means adapted to cause, when said computer program is run on the data processing device, the data processing device to determine a subset of block sizes for use in an initialisation of a block size control process, and to cause the data processing system to determine said subset from a sequence of available block sizes; wherein the program code means are adapted to cause the data processing system to select, in each iteration of an iterative process, a block size from the sequence of block sizes to be included in the subset of block sizes as a block size that maximises an average likelihood throughput calculated from a previously selected block size of said subset.

According another aspect, a data processing system is configured to determine a subset of block sizes for use in an initialisation of a block size control process, the data processing system being configured to determine said subset from a sequence of available block sizes; wherein the data processing system is adapted to select during each iteration of an iterative process a block size from the sequence of block sizes to be included in the subset of block sizes as a block size that maximises an average likelihood throughput calculated from a previously selected block size of said subset.

For example, the program code means may be loaded in a memory, such as a RAM (Random Access Memory), from a storage medium or from another computer via a computer network. Alternatively, the described features may be implemented by hardwired circuitry instead of software or in combination with software.

BRIEF DESCRIPTION OF THE DRAWINGS:

The above and other aspects will be apparent and elucidated from the embodiments described in the following with reference to the drawing in which:

Fig. 1 shows a schematic block diagram of a communications system that implements a block size control.

Fig. 2 shows a schematic block diagram of an arrangement for controlling the block size of a transmitter.

Fig. 3 illustrates examples of shapes of the distribution of the throughput as a function of the block size around an optimal block size.

Fig. 4 shows a flow diagram of a process for determining an initial block size based on an optimal sequence of block sizes.

Fig. 5 illustrates the block error rate as a function of signal to noise ratio for a number of different block sizes.

Fig. 6 shows examples of the throughput rate as a function of block size for three different signal to noise ratios.

DETAILED DESCRIPTION OF PREFERRED EMBODIMENTS:

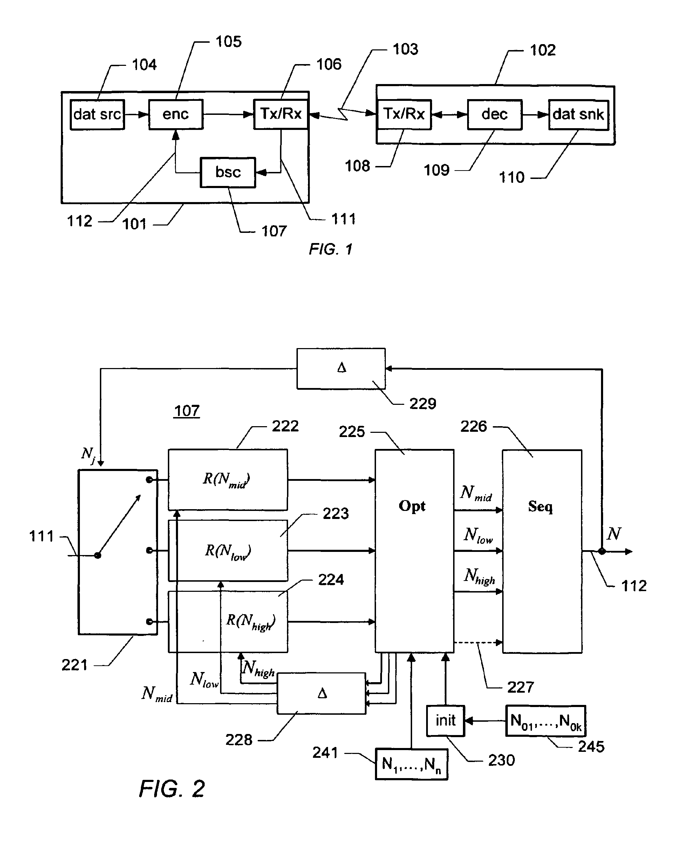

Fig. 1 shows a schematic block diagram of a communications system that implements a block size control. The communications system comprises a transmitter unit 101 and a receiver unit 102. The transmitter unit and the receiver unit communicate with each other via a communications channel 103.

The transmitter unit 101 includes a data source 104 for providing data for transmitting, an encoder unit 105, and a transceiver 106. The encoder unit 105 is operably coupled to the data source and is adapted to encode the data into data packets/blocks in accordance with a predetermined scheme. The transceiver 106 is operably coupled to the encoder unit 105 and is adapted to transmit the data packets to the receiver unit 102 and to receive error information from the receiver unit 102. The transmitter unit further comprises a block size control unit 107 operably coupled to the transceiver 106. The block size control unit 107 receives the error information 111 generated by the receiver unit from the transceiver 106 and determines the block size for the subsequent data packets. In particular, the block size determines the amount of data to be included in each data packet by the encoder 105. Accordingly, the block size control unit 107 forwards the determined block size 112 to the encoder unit 105.

The receiver unit 102 includes a transceiver 108 for receiving the transmitted data from the transmitter unit and for transmitting error information generated by the receiver unit. The receiver unit further comprises a channel decoder 109 operably coupled to the transceiver 108. The channel decoder decodes the received data and determines error information to be returned to the transmitter, e.g. in form of ACK/NACK messages causing the transmitter unit to retransmit the previous data packet. The receiver unit further comprises a data sink 110 for receiving the received data from the channel decoder 109.

In some embodiments, the transmitter unit transmits the data in predetermined transmission time intervals (TTIs), e.g. by transmitting a predetermined number of data packets, e.g. one data packet, per TTI. The length of a TTI may be fixed or variable; typical sizes of TTIs in a WCDMA system are few milliseconds, such as 2-80 ms. However, in other communications systems, the TTIs may be different. In some embodiments, the transmitter unit receives one ACK/NACK for each TTI.

In some embodiments, the transmitter unit further comprises a power control circuit that controls the transmit power with which the transceiver 106 transmits the data packets, e.g. in order to maintain a constant signal to noise ratio. When the transmitter unit receives a NACK from the receiver unit, the transmitter unit re-transmits the last data packet, e.g. in the next TTI. In one embodiment, the retransmission is performed at the same power level as the original transmission. In other embodiments the transmit power is increased for the retransmission. Furthermore, in embodiments of ARQ systems, retransmissions are typically combined with previous transmissions. Accordingly, in some embodiments, the transmit power may even be decreased for a retransmission. Furthermore, the block size may be changed in the retransmission as different coded bits may be transmitted.

Fig. 2 shows a schematic block diagram of an arrangement for controlling the block size of a transmitter, e.g. the block size controller 107 of fig. 1.

The block size controller, generally designated 107, controls the block size by probing two or more block sizes. The probing mechanism utilises blocks of more than one block size and estimates the throughput rate (or the block error rate (BLER)) for a range of block sizes based on direct measurements, thereby avoiding the need to rely on a model of the channel conditions in order to estimate the BLER, the bit error rate (BER), or the throughput rate. The procedure uses a range of block sizes, typically three neighbouring sizes,

$$N_{low} < N_{mid} < N_{high}.$$

However, the procedure is not restricted to three sizes.

Accordingly, the block size controller 107 comprises three rate evaluator units 222, 223, and 224. The rate evaluator units monitor the throughput rates that are achieved with the different sizes, respectively. The rates for each of these sizes are evaluated based on the success of the transmitted blocks of the respective sizes. A rate estimate for a particular size is updated when an ACK/NACK flag is received for that block size. To this end the block size controller comprises a switch 221 that receives the ACK/NACK message 111 from the receiver unit and information about the block size $N_j$ of the previous data packet to which the ACK/NACK relates. The switch 221 forwards the ACK/NACK message to the rate evaluator 222, 223, or 224 that corresponds to the block size $N_j$. Hence, if the previous data packet was transmitted with a block size $N_j = N_{mid}$, the switch 221 forwards the ACK/NACK to rate evaluator 222, if the previous data packet was transmitted with a block size $N_j = N_{low}$, the switch 221 forwards the ACK/NACK to rate evaluator 223, and if the previous data packet was transmitted with a block size $N_j = N_{high}$, the switch 221 forwards the ACK/NACK to rate evaluator 224. The rate evaluators 222, 223, and 224 determine respective estimated throughput rates $R(N_{mid})$, $R(N_{low})$, and $R(N_{high})$ for the corresponding block size $N_{mid}$, $N_{low}$, or $N_{high}$. In one embodiment, each rate evaluator estimates a corresponding block error rate (BLER), e.g. by calculating a windowed average of a suitable number of ACK/NACK flags, by calculating an exponential average or a filtered exponential average of the ACK/NACKS, or the like. From the estimated BLER, each rate evaluator may then calculate the corresponding estimated throughput from the estimated BLER and the corresponding block size, according to (1-BLER)N.

Alternatively, the rate evaluators directly determine an estimate of the throughput rate, e.g. by calculating a windowed average of a suitable number of ACK/NACK flags, by calculating an exponential average or a filtered exponential average of the ACK/NACKS, or the like. In one embodiment, upon receipt of an ACK/NACK flag $F_j$, the estimate $\hat{R}_j(N_j)$ is updated according to

$$\hat{R}_j\left(N_j\right) = \left(1 - \varepsilon\right)\hat{R}_{j-1}\left(N_j\right) + \varepsilon F_j N_j,$$

where $\hat{R}_j(N_j)$ is the estimate of the throughput rate for block size $N_j$, $\hat{R}_{j-1}(N_j)$ is the block size estimated after receipt of the previous ACK/NACK flag for the block size $N_j$, where $F_j=1$ indicates that the previous block of size $N_j$ was successfully received, while $F_j=0$ indicates that the previous block of size $N_j$ was not successfully received, and where $\varepsilon$ is a small positive constant in the range $0 < \varepsilon \le 1$. The time constant $\varepsilon$ of the above filter operation should be long enough to capture a few block errors in stationary conditions. A too long time constant results in slow convergence and therefore slows block size control. A too short time constant results in noisy rate estimates and therefore incorrect block size decisions.

When no ACK/NACKs have been received for a given block size yet, the rate evaluator generates a suitable initial rate estimate for the corresponding block size. In particular, this situation occurs after initialisation. Assuming that an initialization procedure has determined an initial block size $N_0$, a corresponding initial rate may be estimated as

$$\hat{R}_{initial}(N_0) = (1 - BLER_0)N_0 / T_{tti},,$$

where $BLER_0$ is an estimate of a BLER. For example, assuming a BLER of 10% the initial rate would be

$$\hat{R}_{initial}(N_0) = 0.9 N_0 / T_{tti},,$$

where $T_{tti}$ is the time used for transmitting one data block. Further uninitialized and/or outdated rate estimates can be initialized with (a possibly somewhat lower value than) an active rate estimate corresponding to a neighbouring block size. For example, when the initial value of $N_{mid}$ is set to a determined optimal initial value $N_0$, $N_{low}$ and $N_{high}$ are set to the next smaller and next larger block size than $N_0$, respectively. The corresponding initial rates may be set to $\hat{R}_{initial}(N_{low}) = \hat{R}_{initial}(N_{high}) = \alpha \hat{R}_{initial}(N_0)$ for a suitable $\alpha < 1$, e.g. $\alpha = 0.9$.

The rate evaluator units 222, 223, and 224 forward the calculated rates $R(N_{mid})$, $R(N_{low})$, $R(N_{high})$, respectively, to a block size optimizer unit 225.

The block size optimizer unit 225 attempts to detect whether the transmission conditions have changed such that another block size is preferred. In particular, the used block sizes are increased if

$$R(N_{low}) < R(N_{mid}) < R(N_{high})$$

and decreased if

$$R(N_{low}) > R(N_{mid}) > R(N_{high}).$$

For example, if the block sizes are selected from a sequence of increasing block sizes $N_1, ..., N_n$, i.e. a sequence where $N_j < N_{j+1} \,\forall\, j \in \{1,...,n-1\}$, and if the presently active block sizes are $N_{low} = N_{j-1}$, $N_{mid}=N_j$, $N_{high}=N_{j+1}$ for some $j \in \{3,...,n-2\}$, an increase of the block size results in new active block sizes $N_{low} = N_j$, $N_{mid}=N_{j+1}$, $N_{high}=N_{j+2}$, while a decrease of the block size results in new active block sizes $N_{ow} = N_{j-2}$, $N_{mid}=N_{j-1}$, $N_{high}=N_j$. It is understood that the special cases where the active block sizes reach the upper/lower limit of the sequence of block sizes require special attention, since no further increase/decrease of the block size is possible. For example, if $N_{low}=N_1$, a decrease in block size may result in $N_{low}=N_{mid}=N_1$ and $N_{high}=N_2$, and no further decrease of the block size would be performed. In another example, if $N_{low}=N_1$, the blocks sizes are selected to be $N_{low}=N_1$, $M_{mid}=N_2$, and $N_{high}=N_3$, and the block size optimizer 225 sends a signal to the sequence generator 226 indicating that the limit of block sizes has been reached, thereby still monitoring three block sizes.

It is further noted that the case when $R(N_{mid}) < R(N_{low})$ and $R(N_{mid}) < R(N_{high})$ can be ignored, since this condition is due to measurement errors.

The sequence $N_1, ..., N_n$ of available block sizes is stored in a memory 241 or other storage means of the transmitter unit. The sequence may be stored in any suitable way, e.g. as a table of block sizes, as an indication of a maximum and minimum block size together with a step size between adjacent block sizes, or the like.

In some embodiments, alternative conditions may be employed for the determination whether a different block size is preferred. For example, hysteresis may be introduced in the above conditions in order to avoid too frequent switching between block sizes. In particular, the above conditions may be replaced by

$$R(N_{low}) < R(N_{mid}) < R(N_{high}) - \delta$$

for an increase and by

$$R(N_{low}) - \delta > R(N_{mid}) > R(N_{high})$$

for a decrease of the block size, where $\delta$ is a suitably selected small positive constant. Alternatively, $\delta$ may be selected to be a constant slightly smaller than 1 multiplied by the corresponding throughput rate.

The block size optimizer unit 225 forwards the determined block sizes $N_{mid}$, $N_{low}$ and $N_{high}$ to a sequence generator 226 and, via a suitable delay 228, back to the respective rate evaluators.

The block size sequence generator 226 produces a sequence of momentary block sizes, i.e. a sequence where each element of the sequence is selected from the values $N_{mid}$, $N_{low}$ and $N_{high}$. An examplary sequence is ($N_{mid}$, $N_{mid}$, $N_{mid}$, $N_{low}$, $N_{mid}$, $N_{mid}$, $N_{mid}$, $N_{high}$, $N_{mid}$, $N_{mid}$ $N_{mid}$, $N_{low}$,...), i.e. in this example the relative frequencies of $N_{mid}$, $N_{low}$, and $N_{high}$ are 6:1:1, and the sequence has a periodic structure. The relative frequencies, with which the different block sizes are used in the sequence may be the same or different. The sequence may be a random sequence of block sizes or a systematic sequence as in the above example. In one embodiment, the best block size ($N_{mid}$) is used more frequently than those with lower rates as in the above sample sequence. The relative frequency of occurrence of the different block sizes is a trade-off between fast detection of changes in the transmission conditions and high average rate.

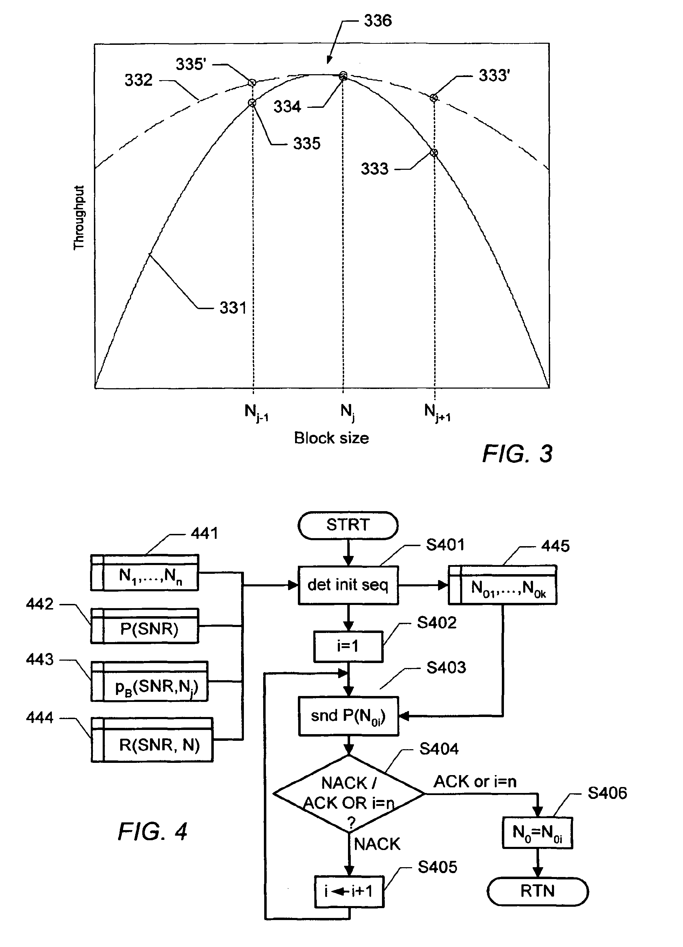

Optionally, the sequence generator 226 further receives additional information 227 from the block size optimizer unit 225, in particular information about one or more of the characteristics of the evaluated rates, e.g., an indication of whether there are small or large differences between the evaluated rates. Such information may be used by the sequence generator when generating the sequence of block sizes. For example, information about the differences in the estimated rates can be used to determine the relative frequency with which the different block sizes occur in the sequence, as will be illustrated with reference to fig. 3.

Fig. 3 illustrates examples of shapes of the distribution of the throughput as a function of the block size around an optimal block size. In particular, fig. 3 shows an example of a first distribution 331 of the throughput as a function of block size (shown as a solid line) and an example of a second distribution 332 of the throughput as a function of block size (shown as a dashed line). Both distributions have a maximum at the same location 336. However, the distribution 331 is more sensitive to changes in the block size around the maximum 336 than the distribution 332, i.e. when the block size deviates from the optimal value the throughput for the distribution 331 decreases more rapidly than the throughput for the distribution 332. In the example of fig. 3, three possible block sizes $N_{j-1}$, $N_j$, and $N_{j+1}$ are indicated. For both distributions the block size $N_j$ provides the largest throughput, as indicated by the dot 334. Hence, the block size optimizer 225 of fig. 2 would select the block sizes to be probed to be $N_{low}=N_{j-1}$, $N_{mid}=N_j$, and $N_{high}=N_{j+1}$. For the distribution 331, the neighbouring block sizes $N_{j-1}$ and $N_{j+1}$ result in considerably smaller throughput as indicated by dots 335 and 333, respectively. For the distribution 332, on the other hand, use of one of the neighbouring block sizes instead of the optimal block size would only result in a minor decrease of the throughput, as indicated by dots 333' and 335'. Hence, assuming a situation where the throughput is sensitive to the block size, e.g. as in the case of distribution 331, an embodiment of the sequencer generates a sequence from the block sizes $N_{low}=N_{j-1}$, $N_{mid}=N_j$, and $N_{high}=N_{j+1}$ such that $N_{mid}$ is used considerably more frequently than the alternative block sizes $N_{low}$ and $N_{high}$. Firstly, too frequent use of the alternative block sizes would result in an undesired decrease of the throughput. Secondly, due to the high sensitivity of the throughput around the optimal block size, a comparatively small number of measurements for the alternative block sizes provides a statistically sufficient basis for detecting changes as to which of the three block sizes provides the largest throughput.

In a situation as illustrated by distribution 332, an embodiment of the sequencer selects the sequence of $N_{low}$, $N_{mid}$, and $N_{high}$ such that the three block sizes are used at substantially the same frequency, or that $N_{mid}$ is used slightly more frequently. Firstly, in this situation, the use of a non-optimal, neighbouring block size does not have a great effect on the throughput. Secondly, a reliable detection as to which block size provides the largest throughput requires more measurements. Hence, in one embodiment, the sequencer determines the relative frequency of the primary block size $N_{mid}$ and the alternative block sizes $N_{low}$ and $N_{high}$ according to the difference in the estimated throughput for these block sizes. In one embodiment the alternative $N_{low}$ and $N_{high}$ may be assigned the same frequency, while in other embodiments, the frequency of each alternative block size may be determined individually.

Again referring to fig. 2, the sequence generator 226 outputs a new block size N, designated 112, according to the generated sequence for every new data packet to be sent, or after a predetermined number of data packets, if a smaller update rate is desired.

The block size N is fed into the encoder and controls the block size of the transmitted data packets as described above. The block size is also fed back to the switch 221, via a suitable delay 229 corresponding to the system delay of the communications system until receipt of the ACK/NACK corresponding to the generated block size N.

Hence, in the above, a block size controller is described that performs a method of controlling a block size of data blocks to be transmitted from a transmitter to a receiver via a communications link. The method comprises the following steps:

- determining a first block size based on at least one indication received from the receiver, the indication indicating whether a previously transmitted data block was successfully received by the receiver;
- determining at least one alternative block size related to the first block size;
- transmitting at least one current data block with a current block size selected from the first block size and the at least one alternative block size;
- receiving at least one indication from the receiver, the at least one indication indicating whether the transmitted at least one current data block was successfully received; and
- determining an adjusted block size and corresponding at least one adjusted alternative block size based on at least the received at least one indication.

The block size controller of fig. 2 further comprises an initialisation unit 230 that generates initial values of the block sizes $N_{mid}$, $N_{low}$, $N_{high}$, and forwards the initial values to the optimizer 225. Hence, during an initialisation process, the block size optimizer 225 forwards the received initial values to the sequencer 226 and back to the rate evaluators 222, 223, and 224. The rate evaluators then determine an initial rate estimate as described above. In one embodiment, the initialisation unit 230 determines an initial estimate of an optimal block size $N_{mid} = N_0$, and sets the alternative block sizes $N_{low}$ and $N_{high}$ to the next smaller and the next larger block size, respectively.

In one embodiment, the initial block size No is determined by sending the first data block with an initially selected block size. The first data block, or a data block determined according to a suitable retransmission scheme, e.g. employing an incremental redundancy coding scheme, is retransmitted until the data included in the first data block has been received correctly by the receiver, and the initialisation unit determines the initial block size from the amount of data transmitted during the retransmissions.

In another embodiment, the initial block size No is determined by sending the first block with a large block size, e.g. the largest possible block size. Hence, in the absence of any prior knowledge, as large blocks as possible are chosen, thereby avoiding transmissions at unnecessarily low rates. The block size is then decreased as long as the blocks are not successfully received by the receiver, i.e. as long as a NACK is received from the receiver. In situations where some prior knowledge exists, a smaller block size may be used as a starting block size.

Hence, the initial block size is determined by starting with a large block, and then decreasing the size as long as the blocks are NACKed. The sequence of block sizes, while block errors occur, can be stored in a table. The table entries can be generated through analytical analysis or be based on simulations and/or measurements. In an alternative embodiment, the block size is divided by a constant, e.g., 2.0, each time an incorrect block is received during the initialization phase.

A particular efficient process for determining the optimal block size is based on a sequence of specifically selected block sizes, as will be described in greater detail below with reference to fig. 4. Consequently, in the embodiment of fig. 2, the initialisation unit 230 has access to a stored sequence of selected block sizes, designated 245, for use in the initialisation process. The stored sequence 245 is a subset of the total set of available block sizes 241. Accordingly, the initialisation sequence 245 may be stored in a memory or different storage means, as a separate table, as instructions for generating the sequence, or the like. Alternatively, the available set of block sizes 241 and 245 may be stored in the same memory, e.g. as a table of available block sizes where the initialisation block sizes are marked accordingly, e.g. by a flag or other table entry.

Fig. 4 shows a flow diagram of a process for determining an initial block size based on an optimal sequence of block sizes.

The process starts at step S401, where the process generates a sequence of block sizes selected from the number of possible block sizes. To this end, the process receives a set of possible block sizes 441. Typically, the available block sizes depend on the communications system in question, and may be restricted to a limited set of discrete block sizes. For the purpose of the present description, it is assumed that a set $\{N_1,...,N_n\}$ of n block sizes is available where $N_1 = N_{max}$ is the largest block size.

The process further receives a distribution P(SNR) of the signal to noise ratio SNR, designated 442. The distribution P(SNR) depends on the channel conditions of the transmission channel over which the data packets are transmitted. For a given channel, an estimated distribution can be determined by measurements based on received pilot symbols known per se. Such a measurement may result in a distribution localised around a certain signal to noise ratio and with a width of a few dB. In the absence of such measurements or other information about the distribution of SNR, the distribution may be assumed as a flat distribution.

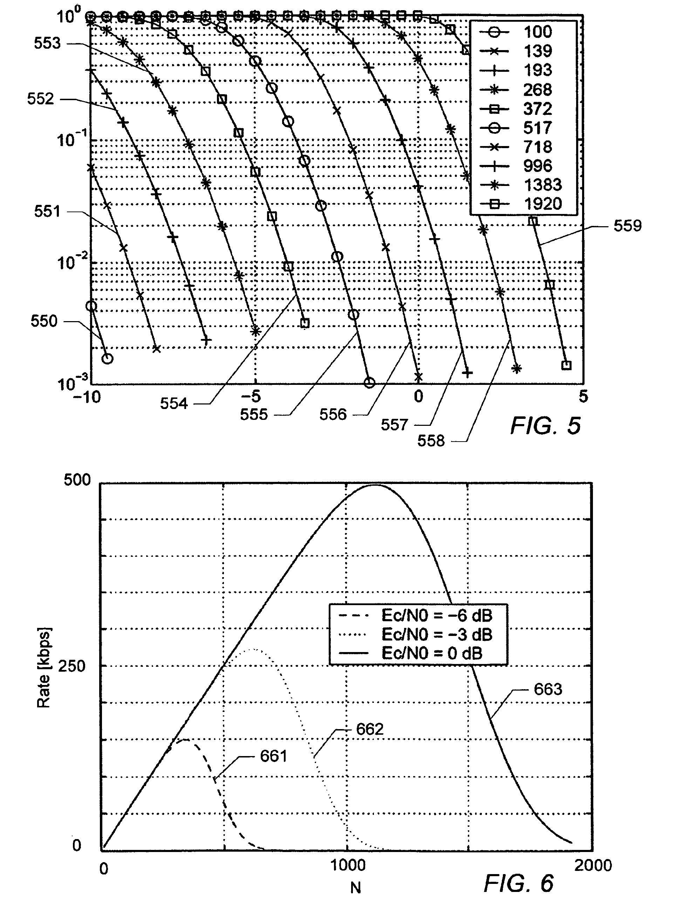

The process further receives probability distributions $p_B(SNR, N_j)$ (443) determining the probability, as a function of SNR, that a packet with block size $N_j$, $j \in \{1,...n\}$, is not successfully received. The probabilities $p_B(SNR,N_j)$ depend on the type of channel. For simple cases, the probabilities $p_B(SNR,N_j)$ can be expressed analytically. However, in practice, the probabilities $p_B(SNR,N_j)$ are typically obtained for a given channel type by measurements of the block error rates for different block sizes and different signal to noise ratios. An example of the dependency of the BLER on the signal to noise ratio and block size is illustrated in fig. 5.

The process further receives a rate function R(SNR, N) (444) describing the throughput rate as a function of the signal to noise ratio and the block size. Again, the throughput rate R(SNR,N) depends on the channel type and can - for simple cases - be determined analytically. Alternatively, R(SNR,N) can be determined by measurements similar to $p_B(SNR,N_j)$. An example of the dependency of the throughput rate on the signal to noise ratio and block size is illustrated in fig. 6.

The probability distributions P(SNR) and $p_B(SNR,N_j)$ and the rate function R(SNR,N) may be pre-determined and stored, e.g. as a set of functions in analytical form, such as parametrised functions fitted to measured data, as a table of discrete data points, or the like.

In step S401 a subset $N_{01} > N_{02} > ...> N_{0k}$, $k \leq n$ of the set of available block sizes is determined by the following process:

$N_{01}$ is selected to be a suitably large initial block size. For example, $N_{01}$ may be selected to be the largest block

size, i.e. $N_{01}=N_{max}$, thereby providing a resource-effective selection of $N_{01}$.

The remaining block sizes $N_{02}, ..., N_{0k}$ are determined iteratively according to the following equation:

$$N_{0j} = \underset{N}{\mathrm{argmax}} \int_0^\infty P(SNR)R(SNR,N)\left(\prod_{i=1}^{j-1} p_B(SNR,N_{0i})\right)dSNR. \qquad (1)$$

Hence, $N_{0j}$ can be determined, based on the above stored distributions and rate functions, by numerically calculating the above integral for all block sizes from the set of available block sizes that are smaller than $N_{0j}$, and by determining the block size for which the integral is largest. The numerical integration may be performed by any suitable numeric integration technique known per se.

Hence, $N_{0j}$ is determined to be the block size that maximises the average Likelihood throughput given that transmissions with block sizes $N_{01},...,N_{0\,j-1}$ have failed.

More particular, the above equation corresponds to a likelihood function

$$L(SNR) = P(SNR)\left(\prod_{i=1}^{j-1} p_B(SNR,N_{0i})\right).$$

It is understood that the calculation of $N_{0j}$ may be based on alternative likelihood functions. For example, a more generalised likelihood function that takes the possibility of retransmission attempts into account is

$$L(SNR) = P(SNR)\prod_{i=1}^{j-1}\left[F_i \cdot p_B(SNR,N_i,k_i)+(1-F_i)\cdot(1-p_B(SNR,N_i,k_i))\right]$$

where $F_i \in \{0,1\}$ designates the ACK/NACK flag received for transmission attempt $k_i$ with block size $N_i$. Accordingly $p_B$ $(SNR,N_j,k_j)$ designates the probability of failure, as a function of SNR, for transmission attempt $k_i$ with block size $N_i$.

In some embodiments, a sequence of block sizes is determined off-line by the above process, e.g. for a given channel type and for predetermined assumptions on the channel conditions. The determined sequence is stored in a table 445 in a memory or other storage device of the transmitter. Alternatively, the process determines several sequences for different channel types and/or channel conditions. The sequences are then stored in the transmitter, and the transmitter selects one of the sequences depending on the channel over which a transmission is to be initiated and/or the assumed and/or detected channel conditions.

The size of the determined sequence depends on the number of available block sizes in the communications system. Furthermore, system specifications may limit the allowed number of initial transmission attempts, thereby effectively limiting the number of block sizes of the sequence that can be used during initialisation. In most systems the process determines less than 10 block sizes, e.g. less than 7 block sizes, in particular 4-5 block sizes.

Once the sequence of block sizes is determined, the process of fig. 4 continues at step S402, and the transmitter unit performs the actual initialisation in the subsequent steps S402-S406. For example, in the embodiment of fig. 2, the initialisation unit 230 may perform the steps S402-S406. As mentioned above, in some embodiments, step S401 is performed once off-line, and the resulting sequence 445 is stored. During operation of the transmitter, the initialisation steps S402-S406 are performed based on the stored sequence 445 each time a transmission channel is initialised. Hence, the sequence 445 only needs to be generated once. Furthermore, the sequence generation in step S401 does not need to be performed by the transmitter unit itself, but may be performed by a separate data processing system, e.g. a personal computer. The generated sequence is then loaded into the transmitter unit.

In step S402, the process initialises a counter i=1 and sets the current block size to the largest block size $N_{0i}=N_{01}=N_{max}$, or to another suitably large initial block size. For example, the initial block size may be determined based on some information about the SIR density function, e.g. from eqn. (1) where the product $\prod_{i=1}^{j-1} p_B(SNR, N_{0i})$ is equal to 1.

In step S403, the process transmits a data packet with the current block size $N_{0i}$.

In step S404, the process determines, based on a received ACK/NACK flag, whether the transmitted data packet was successfully received by the receiver. If the data packet was successfully received or if the smallest possible block size has been reached, the process continues at step S406; otherwise the process continues at step S405.

In step S405, the counter i is incremented to i+1, and the current block size is set to the next smaller block size from the sequence 445 accordingly. Subsequentfy, the process returns to step S403 and transmits the next data packet with the smaller packet size.

In step S406, the process sets the optimal initial block size No to be equal to the current block size $N_{0i}$ for which an ACK was received. Subsequently, the initialisation process terminates, i.e. outputs the initial block size No to the block size control unit that performs the sub-sequent control of the block size.

Hence, in summary, the above process determines an initial primary block size by performing the following steps:

a) selecting a current block size from a sequence of possible block sizes;
b) transmitting a data block with the current block size;
c) receiving an indication from the receiver, the indication indicating whether the transmitted data block was successfully received;
d) selecting a block size from the sequence of possible block sizes smaller than the current block size as a new current block size, if the indication indicates that the transmitted data block was not successfully received;
e) repeating steps b) through d) with the new current block size until a an indication is received that the transmitted data block was successfully received;
f) selecting the initial primary block size to be the latest new current block size.

In an alternative embodiment, the initialisation process makes use of a retransmission protocol when determining the initial block size. For example, the transmitter transmits a first block with a predetermined large block size, e.g. the largest available block size. If the transmitter receives a NACK, a retransmission of the same block or a modified block is performed, e.g. a block that is modified based on an incremental redundancy coding scheme. The retransmission procedure is repeated until an ACK is received. Then an estimated of a suitable block size is determined based on the number of retransmissions until the ACK was received or a similar quantity indicative of the amount of retransmitted data. Furthermore, alternative or additional information, such as the contents of the (re)transmitted blocks and/or the particular retransmission scheme employed, may be used in the determination of the suitable block size.

For example, the initialisation may be performed according to the following process:

(a) The transmitter sends a data block with the largest available block size $N_{max}$.
(b) If the transmitter receives a NACK from the receiver indicating that the data block was not received correctly, the transmitter retransmits an identical data block.
(c) The transmitter repeats step (b), until the transmitter receives an ACK from the receiver indicating that the data block was received correctly.
(d) The transmitter sets a variable T to be equal to the number of retransmissions, i.e. the number of times step (b) was performed.
(e) The transmitter sets the initial block size $N_0$ to be equal to $N_{max}/T$, or to the next smallest possible block size.

In another example, the initialisation is performed according to the following process:

(a) The transmitter sends a data block with the largest available block size $N_{max}$.
(b) If the transmitter receives a NACK from the receiver indicating that the data block was not received correctly, the transmitter retransmits an identical or modified data block according to a predetermined retransmission procedure employed by the communications system.
(c) The transmitter repeats step (b), until the transmitter receives an ACK from the receiver indicating that the data block was received correctly.
(d) The transmitter sets a variable T to be equal to the number of transmitted bits.
(e) The transmitter sets the initial block size $N_0$ to be equal to $(N_{max}/T) \cdot N_{max}$, or to the next smallest possible block size.

Fig. 5 illustrates the block error rate as a function of signal to noise ratio for a number of different block sizes. In particular, the example of fig. 5 corresponds to a BPSK modulated "additive white Gaussian noise" (AWGN) channel of a wideband code division multiple access (WCDMA) system. The blocks are assumed to be coded using repetition coding. There is further assumed to be no re-transmissions or re-combining.

The chip rate is assumed to be $F_c$ = 3.84 Mbps, the transmission time interval is assumed to be $T_{tti}$ = 2 ms, the spreading factor is assumed to be sf = 4. The maximum block size is $N_{max}$ = $T_{tti} \cdot F_c$ / sf = 1920 bits.

The bit energy $E_b$ for BPSK coding is $E_b$ = sf $\cdot E_c$ / r, where $E_c$ is the energy per chip and r the code rate.

The bit error probability for an AWGN channel, is given by $p_b = Q\left(\sqrt{2E_b / E_{No}}\right) \approx e^{-E_b / E_{No}}$ , where Q is the complementary Gaussian distribution and $E_{No}$ the noise energy, i.e. the signal to noise energy is SNR = $E_c/E_{No}$.

Assuming repetition coding, the coding rate is 1/r = $N_{max}$ / N, and the block error probability for the first transmission attempt becomes

$$p_B(SNR, N, 1) = 1 - (1 - p_B)^N = 1 - \left[1 - Q\left(\sqrt{2 \cdot sf \cdot N_{max} \cdot SNR / N}\right)\right]^N.$$

This is also the block error rate (BLER), as in this example retransmissions are not considered for simplicity.

Fig. 5 shows the BLER as a function of SNR for an example of a set of block sizes, namely the log spaced block sizes 100 (curve 550), 139 (curve 551), 193 (curve 552), 268 (curve 553), 372 (curve 554), 517 (curve 555), 718 (curve 556), 996 (curve 557), 1383 (curve 558), and 1920 (curve 559).

Fig. 6 shows examples of the throughput rate as a function of block size for three different signal to noise ratios. In particular, fig. 6 shows the throughput in the same example system as used in fig. 5 for signal to noise ratios $E_c/E_{No}$ = -6dB (dashed curve 661), $E_c/E_{No}$ = -3dB (dashed curve 662), and $E_c/E_{No}$ = 0dB (dashed curve 663).

In general, the throughput R may be expressed as a function of the received SNR and the block size N as follows:

$$R(SNR, N) = \frac{N}{T_{tti}} \frac{1 - p_1 p_2 \cdot \ldots \cdot p_n}{1 + p_1 + p_1 p_2 + \ldots + p_1 p_2 \cdot \ldots \cdot p_{n-1}},$$

where $T_{tti}$ is the duration of the transmission, e.g., 2 ms, and $p_i$ are the probabilities of failure of the i-th transmission given that the previous attempts have failed.

From this relation the following observations may be made: When no combining of retransmitted blocks is used, i.e., $p_1 = p_2 = p_n$, then

$$R = R_{min} = N(1 - p_1) / T_{tti}.$$

Assuming perfect combining, i.e., all blocks are correct after the first retransmission ($p_2$=0), then

$$R = R_{max} = \frac{N}{T_{tti}} \frac{1}{(1 + p_1)}.$$

When the block error probability is small, $R_{min}$ and $R_{max}$ are similar. Significant combining gains are therefore only achievable at high block error probabilities. E.g., at 10% block error rate, the maximum rate improvement is 1%. Furthermore, from numerical examples it has been observed that for blocks sizes in the range 200-2000 bits the optimized BLER is 11-15%.

In particular, for the example system described in connection with fig. 5, the throughput rate may be expressed as

$$R(SNR, N) = \frac{N}{T_{tti}} \left[ 1 - Q\left( \sqrt{2 \cdot sf \cdot N_{max} \cdot SNR / N} \right) \right]^N .$$

As can be seen from fig. 5, for each SNR there is an optimal block size where the throughput rate has a maximum. Furthermore, it can be seen that the optimal block size increases with SNR.

Hence, in a system where the SNR is known to the transmitter, the transmitter can select a block size which increases the throughput rate. However, in many systems the SNR is not known to the transmitter, even though in many systems the SNR may at least be assumed to be constant, since the power control mechanism may be controlled by the receiver such that the SNR kept constant. In other systems, the power control mechanism attempts to keep the BLER constant. In such a system it would be advantageous to always select the largest block size. Hence, in systems where the SNR and/or channel conditions are unknown to the transmitter or at least uncertain, as is typically the case in a practical system, the block size control method and the initialisation method described herein are particularly advantageous.

Furthermore, the block size initialisation and control described herein is not limited to systems with constant SIR, since the block size control detects changes in the estimated BLER, e.g. due to changes in the channel.

It is understood that the assumptions made in connection with the example of figs. 5 and 6 are merely intended as examples, and other assumptions may be applicable depending on the application. For example, the specified parameters may assume different values, channel fading may be taken into consideration, other coding schemes than repetition coding may be used, block combining may be used, etc.

For example, the block size initialisation and control described herein may also be applied in situations where the ACK/NACK indications received by the transmitter are unreliable. Even though the initialisation procedure may result in a larger initial block size than for reliable ACK/NACK indications, the subsequent update process would still converge to an advantageous value.

Furthermore, the block size control method described herein may be applied both in systems with and without retransmissions. For example, in a system with retransmissions, a retransmission count may be forwarded to the optimiser unit and used in the selection of the primary block size.

Furthermore, the block size control described herein automatically adapts to fast fading situations. Furthermore, the block size control is adaptable to slow fading performance, e.g. by adapting time constants of the rate estimation, optimiser updates, etc. The time constants may be adapted based on estimates of the channel variation rate, Doppler, etc.

The present invention may be applied to different communications systems. A possible application of the presented invention is for block size selection in the Enhanced uplink concept in WCDMA.

Although some embodiments have been described and shown in detail, the invention is not restricted to them, but may also be embodied in other ways within the scope of the subject matter defined in the following claims.

The method, product means, and device described herein can be implemented by means of hardware comprising several distinct elements, and by means of a suitably programmed microprocessor. In the device claims enumerating several means, several of these means can be embodied by one and the same item of hardware, e.g. a suitably programmed microprocessor, one or more digital signal processor, or the like. The mere fact that certain measures are recited in mutually different dependent claims or described in different embodiments does not indicate that a combination of these measures cannot be used to advantage.

It should be emphasized that the term "comprises/comprising" when used in this specification is taken to specify the presence of stated features, integers, steps or components but does not preclude the presence or addition of one or more other features, integers, steps, components or groups thereof.

**Claims**

1.  A method of controlling a block size of data blocks to be transmitted from a transmitter (101) to a receiver (102) via a communications link (103), the method comprising determining an adjusted block size (112) based on at least one indication (111) indicating whether a previously transmitted data block with a current block size was successfully received by the receiver; **characterised in that** determining the adjusted block size comprises

    - transmitting a number of data blocks having respective current block sizes (112), wherein each current block size is selected from at least two previously determined candidate block sizes ($N_{mid}$, $N_{low}$, $N_{high}$);
    - determining at least one adjusted candidate block size from a number of indications (111), each indication indicating whether a corresponding one of the transmitted data blocks was successfully received by the receiver;

and

- replacing at least one of the previously determined candidate block sizes with the determined at least one adjusted candidate block size.

**2.** A method according to claim 1, wherein the at least two candidate block sizes comprise a primary block size and one or more alternative block sizes; and wherein the current block size is selected to be equal to the primary block size more frequently than to be equal to each of the one or more alternative block sizes.

**3.** A method according to claim 2, further comprising determining, from respective expected throughput rates for the primary block size and the one or more alternative block sizes, a relative frequency with which the primary block size is selected relative to the one or more alternative block sizes.

**4.** A method according to claim 2 or 3, wherein determining at least one adjusted candidate block size comprises

- determining an adjusted primary block size from the one or more indications; and
- determining one or more adjusted alternative block sizes from the determined adjusted primary block size.

**5.** A method according to claim 4, wherein determining the adjusted primary block size comprises

- determining respective effective throughput rates for the transmitted data blocks of each of the candidate block sizes; and
- determining the adjusted primary block size as one of the candidate block sizes that corresponds to the highest of the determined effective throughput rates.

**6.** A method according to claim 5, wherein determining respective effective throughput rates comprises

- determining respective block error rates for the transmitted data blocks of each of the candidate block sizes from said indications; and
- determining respective throughput rates from the block error rates and the corresponding candidate block sizes.

**7.** A method according to any one of claims 2 through 6, wherein the one or more alternative block sizes comprise a smallest block size smaller than the primary block size and a largest block size larger than the primary block size.

**8.** A method according to claim 7, wherein the at least two candidate block sizes are determined from a sequence of possible block sizes; and wherein the smallest block size and the largest block size are selected to be adjacent block sizes to the primary block size within said sequence.

**9.** A method according to any one of claims 1 through 8, further comprising determining an initial primary block size by

- transmitting one or more data blocks with respective block sizes selected from a predetermined sequence of block sizes until at least one of the one or more data blocks is successfully received by the receiver; wherein a smaller block size is selected from said sequence for the transmission of a subsequent data block responsive to a previous one of the one or more data blocks not having been successfully received by the receiver; and
- selecting the initial primary block size to be the block size of a data block that was successfully received by the receiver.

**10.** A method according to claim 9, further comprising determining said predetermined sequence of block sizes by means of an iterative process, wherein during each iteration a subsequent block size is determined as a block size that maximises an average likelihood throughput calculated from at least one block size determined during at least one previous iteration.

**11.** A method according to claim 9 or 10, wherein the sequence of block sizes is precalculated for at least one of a predetermined assumed channel and predetermined assumed channel conditions.

**12.** A method according to claim 10 or 11, wherein the subsequent block size $N_n$ in the n-th iteration of the iterative process is determined from the block sizes $N_1,.... N_{n-1}$ determined in the n-1 previous iterations, from a predetermined distribution $P(SNR)$ of the signal to noise ratio SNR, from respective probabilities $p_B(SNR,N_j), j \in \{1,...,n-1\}$ of receiving an indication that a data block of size $N_j$ was not successfully received given a signal to noise ratio SNR, and from the expected throughput rate R(SNR,N) as a function of signal to noise ratio SNR and block size N, according to

$$N_n = \underset{N}{\mathrm{argmax}} \int_0^\infty P(SNR)R(SNR,N)\left(\prod_{j=1}^{n-1} p_B(SNR,N_j)\right) dSNR.$$

**13.** A method according to claim 11 or 12, comprising pre-calculating and storing at least two sequences of block sizes; wherein each pre-calculated sequence is calculated for at least one of a different assumed channel and different assumed channel conditions.

**14.** A method according to any one of claims 9 through 13, wherein the sequence of block sizes comprises less than 10 different block sizes preferably less than 7, more preferably between 4 and 5 block sizes.

**15.** A method according to any one of claims 1 through 8, further comprising determining an initial primary block size by

   - transmitting at least a first data block with an initial candidate block size;
   - retransmitting at least one data block obtained from at least the first data block until the at least one data block has been received correctly by the receiver;
   - determining the initial primary block size from a quantity indicative of the amount of data transmitted during the retransmissions.

**16.** A method according to claim 15, wherein the quantity indicative of the amount of transmitted data includes at least one of the number of retransmissions and the number of bits transmitted during the retransmissions.

**17.** A method of determining a suitable block size of data blocks to be transmitted from a transmitter (101) to a receiver (102) via a communications link (103), the method comprising

   - transmitting (S403) one or more data blocks with respective block sizes ($N_{0i}$) selected from a predetermined sequence of block sizes (445) until at least one of the one or more data blocks is successfully received by the receiver; wherein a smaller block size is selected (S405) from said sequence for the transmission of a subsequent data block responsive (S404) to a previous one of the one or more data blocks not having been successfully received by the receiver; and
   - selecting (S406) as a suitable block size the block size of a data block that was successfully received by the receiver;

**characterised in that** the method further comprises

   - determining (S401) said predetermined sequence of block sizes by means of an iterative process, wherein during each iteration a subsequent block size is determined as a block size that maximises an average likelihood throughput calculated from at least one block size determined during at least one previous iteration.

**18.** A method according to claim 17, wherein the sequence of block sizes is precalculated for at least one of a predetermined assumed channel and predetermined assumed channel conditions.

**19.** A method according to claim 17 or 18, wherein the subsequent block size $N_n$ in the n-th iteration of the iterative process is determined from the block sizes $N_1, ..., N_{n-1}$ determined in the n-1 previous iterations, from a predetermined distribution P(SNR) of the signal to noise ratio SNR, from respective probabilities $p_B(SNR,N_j)$, $j \in \{1,...,n-1\}$ of receiving an indication that a data block of size $N_j$ was not successfully received given a signal to noise ratio SNR, and from the expected throughput rate R(SNR,N) as a function of signal to noise ratio SNR and block size N, according to

$$N_n = \underset{N}{\text{argmax}} \int_0^{\infty} P(SNR)\,R(SNR,N)\left(\prod_{j=1}^{n-1} p_B(SNR,N_j)\right) dSNR.$$

**20.** A method according to claim 18 or 19 comprising pre-calculating and storing at least two sequences of block sizes; wherein each pre-calculated sequence is calculated for at least one of a different assumed channel and different assumed channel conditions.

**21.** A method according to any one of claims 17 through 20, wherein the sequence of block sizes comprises less than 10 different block sizes preferably less than 7, more preferably between 4 and 5 block sizes.

**22.** A method according to any one of claims 17 through 21, wherein replacing at least one of the previously determined candidate block sizes with the determined at least one adjusted candidate block size is conditioned on the determined at least one adjusted candidate block size resulting in a higher estimated throughput than at least one of the previously determined candidate block sizes.

**23.** A method according to any one of claims 16 through 22, further comprising adjusting the determined block size during transmission of subsequent data blocks by performing the following steps:

- transmitting a number of data blocks having respective current block sizes, wherein each current block size is selected from at least two previously determined candidate block sizes;
- determining at least one adjusted candidate block size from a number of indications, each indication indicating whether a corresponding one of the transmitted data blocks was successfully received by the receiver; and
- replacing at least one of the previously determined candidate block sizes with the determined at least one adjusted candidate block size.

**24.** A method according to claim 23, wherein the at least two candidate block sizes comprise a primary block size and one or more alternative block sizes; and wherein the current block size is selected to be equal to the primary block size more frequently than equal to each of the one or more alternative block sizes.

**25.** A method according to claim 24, further comprising determining, from respective expected throughput rates for the primary block size and the one or more alternative block sizes, a relative frequency with which the primary block size is selected relative to the one or more alternative block sizes.

**26.** A method according to claim 24 or 25, wherein determining at least one adjusted candidate block size comprises determining an adjusted primary block size from the one or more indications; and determining one or more adjusted alternative block sizes from the determined adjusted primary block size.

**27.** A method according to claim 26, wherein determining the adjusted primary block size comprises determining respective effective throughput rates for the transmitted data blocks of each of the candidate block sizes; and determining the adjusted primary block size as one of the candidate block sizes that corresponds to the highest of the determined effective throughput rates.

**28.** A method according to claim 27, wherein determining respective effective throughput rates comprises determining respective block error rates for the transmitted data blocks of each of the candidate block sizes from said indications; and determining respective throughput rates from the block error rates and the corresponding candidate block sizes.

**29.** A method according to any one of claims 23 through 28, wherein the one or more alternative block sizes comprise a smallest block size smaller than the primary block size and a largest block size larger than the primary block size.

**30.** A method according to claim 29, wherein the at least two candidate block sizes are determined from a sequence of possible block sizes; and wherein the smallest block size and the largest block size are selected to be adjacent block sizes to the primary block size within said sequence.

31. A control device (107) for controlling a block size of data blocks to be transmitted by a transmitter unit (101) to a receiver (102) via a communications link (103), wherein the control device is adapted to determine an adjusted block size based on at least one indication indicating whether a previously transmitted data block with a current block size was successfully received by the receiver;

**characterised in that** the control device is further adapted to

- cause the transmitter unit to transmit a number of data blocks having respective current block sizes, wherein the control means is adapted to select each current block size from at least two previously determined candidate block sizes;
- to determine at least one adjusted candidate block size from a number of indications, each indication indicating whether a corresponding one of the transmitted data blocks was successfully received by the receiver; and
- to replace at least one of the previously determined candidate block sizes with the determined at least one adjusted candidate block size.

32. A control device according to claim 31, wherein the at least two candidate block sizes comprise a primary block size and one or more alternative block sizes; and wherein the control device comprises a selector unit (226) adapted to select the current block size to be equal to the primary block size more frequently than to be equal to each of the one or more alternative block sizes.

33. A control device according to claim 32, wherein the selector unit (226) is adapted to determine, from respective expected throughput rates for the primary block size and the one or more alternative block sizes, a relative frequency with which the primary block size is selected relative to the one or more alternative block sizes.

34. A control device according to claim 32 or 33, comprising an optimizer unit (225) adapted to determine an adjusted primary block size from the one or more indications, and to determine one or more adjusted alternative block sizes from the determined adjusted primary block size.

35. A control device according to claim 34, comprising at least one rate evaluation unit (222, 223, 224) adapted to determine respective effective throughput rates for the transmitted data blocks of each of the candidate block sizes; and wherein the optimizer unit is adapted to determine the adjusted primary block size as one of the candidate block sizes corresponding to the highest of the determined effective throughput rates.

36. A control device according to claim 35, wherein the at least one rate evaluation unit is adapted to determine respective block error rates for the transmitted data blocks of each of the candidate block sizes from the indications, and to determine respective throughput rates from the block error rates and the corresponding candidate block sizes.

37. A control device according to any one of claims 32 through 36, wherein the one or more alternative block sizes comprise a smallest block size smaller than the primary block size and a largest block size larger than the primary block size.

38. A control device according to claim 37, adapted to determine the at least two candidate block sizes from a sequence of possible block sizes, and to select the smallest block size and the largest block size to be adjacent block sizes to the primary block size within said sequence.

39. A control device according to any one of claims 31 through 38, further comprising an initialisation unit (230) for determining an initial primary block size, wherein the initialisation unit is adapted

- to cause the transmitter unit to transmit one or more data blocks with respective block sizes selected from a predetermined sequence of block sizes until at least one of the one or more data blocks is successfully received by the receiver; wherein a smaller block size is selected from said sequence for the transmission of a subsequent data block responsive to a previous one of the one or more data blocks not having been successfully received by the receiver; and
- to select the initial primary block size to be the block size of a data block that was successfully received by the receiver.

40. A control device according to claim 39, wherein the initialisation unit is adapted to determine said predetermined sequence of block sizes by means of an iterative process, wherein during each iteration a subsequent block size is determined as a block size that maximises an average likelihood throughput calculated from at least one block size determined during at least one previous iteration.

41. A control device according to claim 39 or 40, comprising storage means (245) for storing a pre-calculated sequence of block sizes for at least one of a predetermined assumed channel and predetermined assumed channel conditions.

42. A control device according to claim 40 or 41, wherein the subsequent block size $N_n$ in the n-th iteration of the iterative process is determined from the block sizes $N_1$, ..., $N_{n-1}$ determined in the n-1 previous iterations, from a predetermined distribution P(SNR) of the signal to noise ratio SNR, from respective probabilities $p_B(SNR,N_j)$, $j \in \{1,...,n-1\}$ of receiving an indication that a data block of size $N_j$ was not successfully received given a signal to noise ratio SNR, and from the expected throughput rate R(SNR,N) as a function of signal to noise ratio SNR and block size N, according to

$$ N_n = \underset{N}{\mathrm{argmax}} \int_0^\infty P(SNR)\,R(SNR,N) \left( \prod_{j=1}^{n-1} p_B(SNR,N_j) \right) dSNR . $$

43. A control device according to claim 41 or 42; wherein the storage means (245) is adapted to store at least two pre-calculated sequences of block sizes; wherein each pre-calculated sequence is calculated for at least one of a different assumed channel and different assumed channel conditions.

44. A control device according to any one of claims 39 through 43, wherein the sequence of block sizes comprises less than 10 different block sizes preferably less than 7, more preferably between 4 and 5 block sizes.

45. A control device according to any one of claims 31 through 38, further comprising an initialisation unit (230) adapted to determine an initial primary block size by

- causing the transmitter unit to transmit at least a first data block with an initial candidate block size, and to retransmit at least one data block obtained from at least the first data block until the at least one data block has been received correctly by the receiver;
- determining the initial primary block size from a quantity indicative of the amount of data transmitted during the retransmissions.

46. A control device according to claim 45, wherein the quantity indicative of the amount of transmitted data includes at least one of the number of retransmissions and the number of bits transmitted during the retransmissions.

47. A control device (107) for controlling a block size of data blocks to be transmitted by a transmitter unit (101) to a receiver (102) via a communications link (103), the control device comprising an initialisation unit (230) for determining a suitable block size, and storage means (241, 441) for storing a sequence of available block sizes, wherein the control device is adapted to

- cause the transmitter unit to transmit one or more data blocks with respective block sizes selected from a said sequence of block sizes until at least one of the one or more data blocks is successfully received by the receiver; wherein the initialisation unit is adapted to select a smaller block size from said sequence for the transmission of a subsequent data block responsive to a previous one of the one or more data blocks not having been successfully received by the receiver; and
- to select as suitable block size the block size of a data block that was successfully received by the receiver;

**characterised in that** the initialisation unit is adapted to select said respective smaller block sizes from a predetermined subset of said stored sequence of block sizes, wherein each smaller block size is determined as a block size that maximises an average likelihood throughput calculated from a previous block size of said subset.

48. A control device according to claim 47, comprising storage means (245) adapted to store a pre-calculated sequence of block sizes for at least one of a predetermined assumed channel and predetermined assumed channel conditions.

**49.** A control device according to claim 47 or 48, wherein the subsequent block size $N_n$ is determined in an n-th iteration of an iterative process from the block sizes $N_1, ..., N_{n-1}$ determined in the n-1 previous iterations, from a predetermined distribution P(SNR) of the signal to noise ratio SNR, from respective probabilities $p_B(SNR,N_j)$, $j \in \{1,...,n-1\}$ of receiving an indication that a data block of size $N_j$ was not successfully received given a signal to noise ratio SNR, and from the expected throughput rate R(SNR,N) as a function of signal to noise ratio SNR and block size N, according to

$$N_n = \underset{N}{\mathrm{argmax}} \int_0^\infty P(SNR)R(SNR,N)\left(\prod_{j=1}^{n-1} p_B(SNR,N_j)\right) dSNR .$$

**50.** A control device according to claim 48 or 49, wherein the storage means is adapted to store at least two pre-calculated sequences of block sizes; wherein each pre-calculated sequence is calculated for at least one of a different assumed channel and different assumed channel conditions.

**51.** A control device according to any one of claims 47 through 50, wherein the sequence of block sizes comprises less than 10 different block sizes preferably less than 7, more preferably between 4 and 5 block sizes.

**52.** A control device according to any one of claims 47 through 51, wherein the control device is further adapted to adjust the determined block size during transmission of subsequent data blocks by performing the following steps:

- transmitting a number of data blocks having respective current block sizes, wherein each current block size is selected from at least two previously determined candidate block sizes;
- determining at least one adjusted candidate block size from a number of indications, each indication indicating whether a corresponding one of the transmitted data blocks was successfully received; and
- replacing at least one of the previously determined candidate block sizes with the determined at least one adjusted candidate block size.

**53.** A control device according to claim 52, wherein the at least two candidate block sizes comprise a primary block size and one or more alternative block sizes; and wherein the control device comprises a selector unit (226) adapted to select the current block size to be equal to the primary block size more frequently than equal to each of the one or more alternative block sizes.

**54.** A control device according to claim 53, wherein the selector unit (226) is adapted to determine, from respective expected throughput rates for the primary block size and the one or more alternative block sizes, a relative frequency with which the primary block size is selected relative to the one or more alternative block sizes.

**55.** A control device according to claim 53 or 54, comprising an optimizer unit (225) adapted to determine an adjusted primary block size from the one or more indications, and to determine one or more adjusted alternative block sizes from the determined adjusted primary block size.

**56.** A control device according to claim 55, further comprising at least one rate evaluation unit (222, 223, 224) adapted to determine respective effective throughput rates for the transmitted data blocks of each of the candidate block sizes; and wherein the optimizer unit is adapted to determine the adjusted primary block size as one of the candidate block sizes corresponding to the highest of the determined effective throughput rates.

**57.** A control device according to claim 56, wherein the at least one rate evaluation unit is adapted to determine respective block error rates for the transmitted data blocks of each of the candidate block sizes from the indications, and to determine respective throughput rates from the block error rates and the corresponding candidate block sizes.

**58.** A control device according to any one of claims 53 through 57, wherein the one or more alternative block sizes comprise a smallest block size smaller than the primary block size and a largest block size larger than the primary block size.

**59.** A control device according to claim 58, wherein the optimizer unit is adapted to determine the at least two candidate block sizes from a sequence of possible block sizes, and to select the smallest block size and the largest block size to be adjacent block sizes to the primary block size within said sequence.

**60.** A transmitter unit comprising a control device according to any one of claims 31 through 59.

**61.** A data processing system configured to determine a subset of block sizes for use in an initialisation of a block size control process, the data processing system being configured to determine said subset from a sequence of available block size the data processing system comprising means adapted for carrying out the steps of the method according to claim 17.

**62.** A computer program product comprising program code means adapted to cause the steps of the method of claim 17 when said program is run on a computer

**Patentansprüche**

**1.** Verfahren zur Kontrolle einer Blockgröße von Datenblöcken, die von einem Sender (101) über eine Verbindungsstrecke (103) an einen Empfänger (102) gesendet werden sollen, wobei das Verfahren ein Bestimmen einer angepassten Blockgröße (112) basierend auf mindestens einer Angabe (111) umfasst, die angibt, ob ein zuvor gesendeter Datenblock mit einer aktuellen Blockgröße durch den Empfänger erfolgreich empfangen wurde; **dadurch gekennzeichnet, dass** das Bestimmen der angepassten Blockgröße umfasst:

- Senden einer Anzahl von Datenblöcken mit jeweiligen aktuellen Blockgrößen (112), wobei jede aktuelle Blockgröße aus mindestens zwei zuvor bestimmten Kandidatenblockgrößen ($N_{mid}$, $N_{low}$, $N_{high}$) ausgewählt wird;
- Bestimmen mindestens einer angepassten Kandidatenblockgröße aus einer Anzahl von Angaben (111), wobei jede Angabe angibt, ob ein entsprechender der gesendeten Datenblöcke durch den Empfänger erfolgreich empfangen wurde; und
- Ersetzen mindestens einer der zuvor bestimmten Kandidatenblockgrößen durch die bestimmte mindestens eine angepasste Kandidatenblockgröße.

**2.** Verfahren nach Anspruch 1, wobei die mindestens zwei Kandidatenblockgrößen eine primäre Blockgröße und eine oder mehr alternative Blockgrößen umfassen; und wobei die aktuelle Blockgröße so ausgewählt wird, dass sie häufiger gleich der primären Blockgröße ist, als dass sie gleich jeder der einen oder der mehreren alternativen Blockgrößen ist.

**3.** Verfahren nach Anspruch 1, ferner umfassend ein Bestimmen aus jeweiligen erwarteten Durchsatzraten für die primäre Blockgröße und die eine oder die mehreren alternativen Blockgrößen einer relativen Häufigkeit, mit welcher die primäre Blockgröße in Bezug auf die eine oder die mehreren alternativen Blockgrößen ausgewählt wird.

**4.** Verfahren nach Anspruch 2 oder 3, wobei das Bestimmen mindestens einer angepassten Kandidatenblockgröße umfasst:

- Bestimmen einer angepassten primären Blockgröße aus der einen oder den mehreren Angaben; und
- Bestimmen einer oder mehrerer angepasster alternativer Blockgrößen aus der bestimmten angepassten primären Blockgröße.

**5.** Verfahren nach Anspruch 4, wobei das Bestimmen der angepassten primären Blockgröße umfasst:

- Bestimmen von jeweiligen effektiven Durchsatzraten für die gesendeten Datenblöcke jeder der Kandidatenblockgrößen; und
- Bestimmen der angepassten primären Blockgröße als eine der Kandidatenblockgrößen, die der höchsten der bestimmten effektiven Durchsatzraten entspricht.

**6.** Verfahren nach Anspruch 5, wobei das Bestimmen von jeweiligen effektiven Durchsatzraten umfasst:

- Bestimmen von jeweiligen Blockfehlerraten für die gesendeten Datenblöcke jeder der Kandidatenblockgrößen aus den Angaben; und
- Bestimmen von jeweiligen Durchsatzraten aus den Blockfehlerraten und den entsprechenden Kandidatenblockgrößen.

**7.** Verfahren nach einem der Ansprüche 2 bis 6, wobei die eine oder die mehreren alternativen Blockgrößen eine kleinste Blockgröße, die kleiner als die primäre Blockgröße ist, und eine größte Blockgröße umfassen, die größer als die primäre Blockgröße ist.

**8.** Verfahren nach Anspruch 7, wobei die mindestens zwei Kandidatenblockgrößen aus einer Folge von möglichen Blockgrößen bestimmt werden; und wobei die kleinste Blockgröße und die größte Blockgröße so ausgewählt werden, dass sie benachbarte Blockgrößen zur primären Blockgröße innerhalb der Folge sind.

**9.** Verfahren nach einem der Ansprüche 1 bis 8, ferner umfassend ein Bestimmen einer anfänglichen primären Blockgröße durch:

- Senden eines oder mehrerer Datenblöcke mit jeweiligen Blockgrößen, die aus einer vorbestimmten Folge von Blockgrößen ausgewählt werden, bis mindestens einer des einen oder der mehreren Datenblöcke durch den Empfänger erfolgreich empfangen wird; wobei eine kleinere Blockgröße aus der Folge für die Übertragung eines anschließenden Datenblocks als Reaktion auf einen vorherigen des einen oder der mehreren Datenblöcke ausgewählt wird, die durch den Empfänger nicht erfolgreich empfangen wurden; und
- derartiges Auswählen der anfänglichen primären Blockgröße, dass sie die Blockgröße eines Datenblocks ist, der durch den Empfänger erfolgreich empfangen wurde.

**10.** Verfahren nach Anspruch 9, ferner umfassend ein Bestimmen der vorbestimmten Folge von Blockgrößen durch einen iterativen Prozess, wobei während jeder Iteration eine anschließende Blockgröße als eine Blockgröße bestimmt wird, die einen mittleren Wahrscheinlichkeitsdurchsatz maximiert, der aus mindestens einer Blockgröße berechnet wird, die während mindestens einer vorherigen Iteration bestimmt wird.

**11.** Verfahren nach Anspruch 9 oder 10, wobei die Folge von Blockgrößen für mindestens eines von einem vorbestimmten angenommenen Kanal und vorbestimmten angenommenen Kanalbedingungen vorausberechnet wird.

**12.** Verfahren nach Anspruch 10 oder 11, wobei die anschließende Blockgröße $N_n$ in der n-ten Iteration des iterativen Prozesses aus den Blockgrößen $N_1$, ..., $N_{n-1}$, die in den n-1 vorherigen Iterationen bestimmt wurden, aus einer vorbestimmten Verteilung P(SNR) des Signal-Rausch-Verhältnisses SNR, aus jeweiligen Wahrscheinlichkeiten $p_B$(SNR, $N_j$), $j \in \{1, ..., n-1\}$ des Empfangens einer Angabe, dass ein Datenblock der Größe $N_j$ in Anbetracht eines Signal-Rausch-Verhältnisses SNR nicht erfolgreich empfangen wurde, und aus der erwarteten Durchsatzrate R (SNR, N) in Abhängigkeit vom Signal-Rausch-Verhältnis SNR und der Blockgröße N bestimmt wird gemäß:

$$N_n = \underset{N}{\mathrm{argmax}} \int_0^\infty P(SNR)\, R(SNR,N) \left( \prod_{j=1}^{n-1} p_B(SNR,N_j) \right) dSNR .$$

**13.** Verfahren nach Anspruch 11 oder 12, umfassend ein Vorausberechnen und Speichern von mindestens zwei Folgen von Blockgrößen; wobei jede vorausberechnete Folge für mindestens eines von einem verschiedenen angenommenen Kanal und verschiedenen angenommenen Kanalbedingungen berechnet wird.

**14.** Verfahren nach einem der Ansprüche 9 bis 13, wobei die Folge von Blockgrößen weniger als 10 verschiedene Blockgrößen, vorzugsweise weniger als 7 und insbesondere zwischen 4 und 5 Blockgrößen umfasst.

**15.** Verfahren nach einem der Ansprüche 1 bis 8, ferner umfassend ein Bestimmen einer anfänglichen primären Blockgröße durch:

- Senden mindestens eines ersten Datenblocks mit einer anfänglichen Kandidatenblockgröße;
- wiederholtes Senden mindestens eines aus mindestens dem ersten Datenblock erhaltenen Datenblocks, bis der mindestens eine Datenblock durch den Empfänger korrekt empfangen wurde;
- Bestimmen der anfänglichen primären Blockgröße aus einer Mengenangabe, welche die Menge von Daten angibt, die während der Wiederholungssendungen gesendet werden.

**16.** Verfahren nach Anspruch 15, wobei die Mengenangabe, welche die Menge von gesendeten Daten angibt, mindestens eines von der Anzahl von Wiederholungssendungen und der Anzahl von Bits umfasst, die während der Wiederholungssendungen gesendet werden.

17. Verfahren zur Bestimmung einer geeigneten Blockgröße von Datenblöcken, die von einem Sender (101) über eine Verbindungsstrecke (103) an einen Empfänger (102) gesendet werden sollen, wobei das Verfahren umfasst:

- Senden (S403) eines oder mehrerer Datenblöcke mit jeweiligen Blockgrößen ($N_{0i}$), die aus einer vorbestimmten Folge von Blockgrößen (445) ausgewählt werden, bis mindestens einer des einen oder der mehreren Datenblöcke durch den Empfänger erfolgreich empfangen wird; wobei eine kleinere Blockgröße aus der Folge für die Übertragung eines anschließenden Datenblocks als Reaktion (S404) auf einen vorherigen des einen oder der mehreren Datenblöcke ausgewählt wird (S405), die durch den Empfänger nicht erfolgreich empfangen wurden; und
- Auswählen (S406) als eine geeignete Blockgröße der Blockgröße eines Datenblocks, der durch den Empfänger erfolgreich empfangen wurde;

**dadurch gekennzeichnet, dass** das Verfahren ferner umfasst:

- Bestimmen (S401) der vorbestimmten Folge von Blockgrößen durch einen iterativen Prozess, wobei während jeder Iteration eine anschließende Blockgröße als eine Blockgröße bestimmt wird, die einen mittleren Wahrscheinlichkeitsdurchsatz maximiert, der aus mindestens einer Blockgröße berechnet wird, die während mindestens einer vorherigen Iteration bestimmt wird.

18. Verfahren nach Anspruch 17, wobei die Folge von Blockgrößen für mindestens eines von einem vorbestimmten angenommenen Kanal und vorbestimmten angenommenen Kanalbedingungen vorausberechnet wird.

19. Verfahren nach Anspruch 17 oder 18, wobei die anschließende Blockgröße $N_n$ in der n-ten Iteration des iterativen Prozesses aus den Blockgrößen $N_1$, ..., $N_{n-1}$, die in den n-1 vorherigen Iterationen bestimmt wurden, aus einer vorbestimmten Verteilung P(SNR) des Signal-Rausch-Verhältnisses SNR, aus jeweiligen Wahrscheinlichkeiten $p_B$ (SNR, $N_j$), $j \in \{1, ..., n-1\}$ des Empfangens einer Angabe, dass ein Datenblock der Größe Nj in Anbetracht eines Signal-Rausch-Verhältnisses SNR nicht erfolgreich empfangen wurde, und aus der erwarteten Durchsatzrate R (SNR, N) in Abhängigkeit vom Signal-Rausch-Verhältnis SNR und der Blockgröße N bestimmt wird gemäß:

$$N_n = \operatorname*{argmax}_N \int_0^\infty P(SNR)\, R(SNR, N) \left( \prod_{j=1}^{n-1} p_B(SNR, N_j) \right) dSNR .$$

20. Verfahren nach Anspruch 18 oder 19, umfassend ein Vorausberechnen und Speichern von mindestens zwei Folgen von Blockgrößen; wobei jede vorausberechnete Folge für mindestens eines von einem verschiedenen angenommenen Kanal und verschiedenen angenommenen Kanalbedingungen berechnet wird.

21. Verfahren nach einem der Ansprüche 17 bis 20, wobei die Folge von Blockgrößen weniger als 10 verschiedene Blockgrößen, vorzugsweise weniger als 7 und insbesondere zwischen 4 und 5 Blockgrößen umfasst.

22. Verfahren nach einem der Ansprüche 17 bis 21, wobei das Ersetzen mindestens einer der zuvor bestimmten Kandidatenblockgrößen durch die bestimmte mindestens eine angepasste Kandidatenblockgröße von der bestimmten mindestens einen angepassten Kandidatenblockgröße abhängt, die zu einem höheren geschätzten Durchsatz als mindestens eine der zuvor bestimmten Kandidatenblockgrößen führt.

23. Verfahren nach einem der Ansprüche 16 bis 22, ferner umfassend ein Anpassen der bestimmten Blockgröße während der Übertragung von anschließenden Datenblöcken durch Ausführen der folgenden Schritte:

- Senden einer Anzahl von Datenblöcken mit jeweiligen aktuellen Blockgrößen, wobei jede aktuelle Blockgröße aus mindestens zwei zuvor bestimmten Kandidatenblockgrößen ausgewählt wird;
- Bestimmen mindestens einer angepassten Kandidatenblockgröße aus einer Anzahl von Angaben, wobei jede Angabe angibt, ob ein entsprechender der gesendeten Datenblöcke durch den Empfänger erfolgreich empfangen wurde; und

- Ersetzen mindestens einer der zuvor bestimmten Kandidatenblockgrößen durch die bestimmte mindestens eine angepasste Kandidatenblockgröße.

24. Verfahren nach Anspruch 23, wobei die mindestens zwei Kandidatenblockgrößen eine primäre Blockgröße und eine oder mehr alternative Blockgrößen umfassen; und wobei die aktuelle Blockgröße so ausgewählt wird, dass sie häufiger gleich der primären Blockgröße als gleich jeder der einen oder der mehreren alternativen Blockgrößen ist.

25. Verfahren nach Anspruch 24, ferner umfassend ein Bestimmen aus jeweiligen erwarteten Durchsatzraten für die primäre Blockgröße und die eine oder die mehreren alternativen Blockgrößen einer relativen Häufigkeit, mit welcher die primäre Blockgröße in Bezug auf die eine oder die mehreren alternativen Blockgrößen ausgewählt wird.

26. Verfahren nach Anspruch 24 oder 25, wobei das Bestimmen mindestens einer angepassten Kandidatenblockgröße ein Bestimmen einer angepassten primären Blockgröße aus der einen oder den mehreren Angaben und Bestimmen einer oder mehrerer angepasster alternativer Blockgrößen aus der bestimmten angepassten primären Blockgröße umfasst.

27. Verfahren nach Anspruch 26, wobei das Bestimmen der angepassten primären Blockgröße ein Bestimmen von jeweiligen effektiven Durchsatzraten für die gesendeten Datenblöcke jeder der Kandidatenblockgrößen und Bestimmen der angepassten primären Blockgröße als eine der Kandidatenblockgrößen umfasst, die der höchsten der bestimmten effektiven Durchsatzraten entspricht.

28. Verfahren nach Anspruch 27, wobei das Bestimmen von jeweiligen effektiven Durchsatzraten ein Bestimmen von jeweiligen Blockfehlerraten für die gesendeten Datenblöcke jeder der Kandidatenblockgrößen aus den Angaben und Bestimmen von jeweiligen Durchsatzraten aus den Blockfehlerraten und den entsprechenden Kandidatenblockgrößen umfasst.

29. Verfahren nach einem der Ansprüche 23 bis 28, wobei die eine oder die mehreren alternativen Blockgrößen eine kleinste Blockgröße, die kleiner als die primäre Blockgröße ist, und eine größte Blockgröße umfassen, die größer als die primäre Blockgröße ist.

30. Verfahren nach Anspruch 29, wobei die mindestens zwei Kandidatenblockgrößen aus einer Folge von möglichen Blockgrößen bestimmt werden; und wobei die kleinste Blockgröße und die größte Blockgröße so ausgewählt werden, dass sie benachbarte Blockgrößen zur primären Blockgröße innerhalb der Folge sind.

31. Steuervorrichtung (107) zum Kontrollieren einer Blockgröße von Datenblöcken, die durch eine Sendeeinheit (101) über eine Verbindungsstrecke (103) an einen Empfänger (102) gesendet werden sollen, wobei die Steuervorrichtung so ausgelegt ist, dass sie eine angepasste Blockgröße basierend auf mindestens einer Angabe bestimmt, die angibt, ob ein zuvor gesendeter Datenblock mit einer aktuellen Blockgröße durch den Empfänger erfolgreich empfangen wurde;

**dadurch gekennzeichnet, dass** die Steuervorrichtung ferner ausgelegt ist zum:

- Bewirken, dass die Sendeeinheit eine Anzahl von Datenblöcken mit jeweiligen aktuellen Blockgrößen sendet, wobei das Steuermittel so ausgelegt ist, dass es jede Blockgröße aus mindestens zwei zuvor bestimmten Kandidatenblockgröße auswählt;
- Bestimmen mindestens einer angepassten Kandidatenblockgröße aus einer Anzahl von Angaben, wobei jede Angabe angibt, ob ein entsprechender der gesendeten Datenblöcke durch den Empfänger erfolgreich empfangen wurde; und
- Ersetzen mindestens einer der zuvor bestimmten Kandidatenblockgrößen durch die bestimmte mindestens eine angepasste Kandidatenblockgröße.

32. Steuervorrichtung nach Anspruch 31, wobei die mindestens zwei Kandidatenblockgrößen eine primäre Blockgröße und eine oder mehr alternative Blockgrößen umfassen; und wobei die Steuervorrichtung eine Auswahleinheit (226) umfasst, die so ausgelegt ist, dass sie die aktuelle Blockgröße so auswählt, dass sie häufiger gleich der primären Blockgröße als gleich jeder der einen oder der mehreren alternativen Blockgrößen ist.

33. Steuervorrichtung nach Anspruch 32, wobei die Auswahleinheit (226) so ausgelegt ist, dass sie aus jeweiligen erwarteten Durchsatzraten für die primäre Blockgröße und die eine oder die mehreren alternativen Blockgrößen eine relative Häufigkeit bestimmt, mit welcher die primäre Blockgröße in Bezug auf die eine oder die mehreren alternativen Blockgrößen ausgewählt wird.

34. Steuervorrichtung nach Anspruch 32 oder 33, umfassend eine Optimierungseinheit (225), die so ausgelegt ist, dass sie eine angepasste primäre Blockgröße aus der einen oder den mehreren Angaben bestimmt und eine oder mehrere angepasste alternative Blockgrößen aus der bestimmten angepassten primären Blockgröße bestimmt.

35. Steuervorrichtung nach Anspruch 34, umfassend mindestens eine Ratenbewertungseinheit (222, 223, 224), die so ausgelegt ist, dass sie jeweilige effektive Durchsatzraten für die gesendeten Datenblöcke jeder der Kandidatenblockgrößen bestimmt; und wobei die Optimierungseinheit so ausgelegt ist, dass sie die angepasste primäre Blockgröße als eine der Kandidatenblockgrößen bestimmt, die der höchsten der bestimmten effektiven Durchsatzraten entspricht.

36. Steuervorrichtung nach Anspruch 35, wobei die mindestens eine Ratenbewertungseinheit so ausgelegt ist, dass sie jeweilige Blockfehlerraten für die gesendeten Datenblöcke jeder der Kandidatenblockgrößen aus den Angaben bestimmt und jeweilige Durchsatzraten aus den Blockfehlerraten und den entsprechenden Kandidatenblockgrößen bestimmt.

37. Steuervorrichtung nach einem der Ansprüche 32 bis 36, wobei die eine oder die mehreren alternativen Blockgrößen eine kleinste Blockgröße, die kleiner als die primäre Blockgröße ist, und eine größte Blockgröße umfassen, die größer als die primäre Blockgröße ist.

38. Steuervorrichtung nach Anspruch 37, ausgelegt, um die mindestens zwei Kandidatenblockgrößen aus einer Folge von möglichen Blockgrößen zu bestimmen und die kleinste Blockgröße und die größte Blockgröße so auszuwählen, dass sie benachbarte Blockgrößen zur primären Blockgröße innerhalb der Folge sind.

39. Steuervorrichtung nach einem der Ansprüche 31 bis 38, ferner umfassend eine Initialisierungseinheit (230) zum Bestimmen einer anfänglichen primären Blockgröße, wobei die Initialisierungseinheit ausgelegt ist zum:

   - Bewirken, dass die Sendeeinheit einen oder mehrere Datenblöcke mit jeweiligen Blockgrößen, die aus einer vorbestimmten Folge von Blockgrößen ausgewählt werden, sendet, bis mindestens einer des einen oder der mehreren Datenblöcke durch den Empfänger erfolgreich empfangen wird; wobei eine kleinere Blockgröße aus der Folge für die Übertragung eines anschließenden Datenblocks als Reaktion auf einen vorherigen des einen oder der mehreren Datenblöcke ausgewählt wird, die durch den Empfänger nicht erfolgreich empfangen wurden; und
   - derartigen Auswählen der anfänglichen primären Blockgröße, dass sie die Blockgröße eines Datenblocks ist, der durch den Empfänger erfolgreich empfangen wurde.

40. Steuervorrichtung nach Anspruch 39, wobei die Initialisierungseinheit so ausgelegt ist, dass sie die vorbestimmte Folge von Blockgrößen durch einen iterativen Prozess bestimmt, wobei während jeder Iteration eine anschließende Blockgröße als eine Blockgröße bestimmt wird, die einen mittleren Wahrscheinlichkeitsdurchsatz maximiert, der aus mindestens einer Blockgröße berechnet wird, die während mindestens einer vorherigen Iteration bestimmt wird.

41. Steuervorrichtung nach Anspruch 39 oder 40, umfassend Speichermittel (245) zum Speichern einer vorausberechneten Folge von Blockgrößen für mindestens eines von einem vorbestimmten angenommenen Kanal und vorbestimmten angenommenen Kanalbedingungen.

42. Steuervorrichtung nach Anspruch 40 oder 41, wobei die anschließende Blockgröße $N_n$ in der n-ten Iteration des iterativen Prozesses aus den Blockgrößen $N_1$, ..., $N_{n-1}$, die in den n-1 vorherigen Iterationen bestimmt wurden, aus einer vorbestimmten Verteilung $P(SNR)$ des Signal-Rausch-Verhältnisses SNR, aus jeweiligen Wahrscheinlichkeiten $p_B(SNR, N_j)$, $j \in \{1, ..., n-1\}$ des Empfangens einer Angabe, dass ein Datenblock der Größe Nj in Anbetracht eines Signal-Rausch-Verhältnisses SNR nicht erfolgreich empfangen wurde, und aus der erwarteten Durchsatzrate $R(SNR, N)$ in Abhängigkeit vom Signal-Rausch-Verhältnis SNR und der Blockgröße N bestimmt wird gemäß:

$$N_n = \underset{N}{\arg\max} \int_0^\infty P(SNR)\,R(SNR,N)\left(\prod_{j=1}^{n-1} p_B(SNR,N_j)\right) dSNR .$$

43. Steuervorrichtung nach Anspruch 41 oder 42, wobei das Speichermittel (245) so ausgelegt ist, dass es mindestens zwei vorausberechnete Folgen von Blockgrößen speichert; wobei jede vorausberechnete Folge für mindestens eines von einem verschiedenen angenommenen Kanal und verschiedenen angenommenen Kanalbedingungen berechnet wird.

44. Steuervorrichtung nach einem der Ansprüche 39 bis 43, wobei die Folge von Blockgrößen weniger als 10 verschiedene Blockgrößen, vorzugsweise weniger als 7 und insbesondere zwischen 4 und 5 Blockgrößen umfasst.

45. Steuervorrichtung nach einem der Ansprüche 31 bis 38, ferner umfassend eine Initialisierungseinheit (230), die so ausgelegt ist, dass sie eine anfängliche primäre Blockgröße bestimmt durch:

- Bewirken, dass die Sendeeinheit mindestens einen ersten Datenblock mit einer anfänglichen Kandidatenblockgröße sendet und mindestens einen aus mindestens dem ersten Datenblock erhaltenen Datenblock wiederholt sendet, bis der mindestens eine Datenblock durch den Empfänger korrekt empfangen wurde;
- Bestimmen der anfänglichen primären Blockgröße aus einer Mengenangabe, welche die Menge von Daten angibt, die während der Wiederholungssendungen gesendet werden.

46. Steuervorrichtung nach Anspruch 45, wobei die Mengenangabe, welche die Menge von gesendeten Daten angibt, mindestens eines von der Anzahl von Wiederholungssendungen und der Anzahl von Bits umfasst, die während der Wiederholungssendungen gesendet werden.

47. Steuervorrichtung (107) zum Kontrollieren einer Blockgröße von Datenblöcken, die durch eine Sendeeinheit (101) über eine Verbindungsstrecke (103) an einen Empfänger (102) gesendet werden sollen, wobei die Steuervorrichtung eine Initialisierungseinheit (230) zum Bestimmen einer geeigneten Blockgröße und Speichermittel (241, 441) zum Speichern einer Folge von verfügbaren Blockgrößen umfasst, wobei die Steuervorrichtung ausgelegt ist zum:

- Bewirken, dass die Sendeeinheit einen oder mehrere Datenblöcke mit jeweiligen Blockgrößen, die aus der Folge von Blockgrößen ausgewählt werden, sendet, bis mindestens einer des einen oder der mehreren Datenblöcke durch den Empfänger erfolgreich empfangen wird; wobei die Initialisierungseinheit so ausgelegt ist, dass sie eine kleinere Blockgröße aus der Folge für die Übertragung eines anschließenden Datenblocks als Reaktion auf einen vorherigen des einen oder der mehreren Datenblöcke auswählt, die durch den Empfänger nicht erfolgreich empfangen wurden; und
- Auswählen als eine geeignete Blockgröße der Blockgröße eines Datenblocks, der durch den Empfänger erfolgreich empfangen wurde;

**dadurch gekennzeichnet, dass** die Initialisierungseinheit so ausgelegt ist, dass sie die jeweiligen kleineren Blockgrößen aus einem vorbestimmten Teilsatz der gespeicherten Folge von Blockgrößen auswählt, wobei jede kleinere Blockgröße als eine Blockgröße bestimmt wird, die einen mittleren Wahrscheinlichkeitsdurchsatz maximiert, der aus einer vorherigen Blockgröße des Teilsatzes berechnet wird.

48. Steuervorrichtung nach Anspruch 47, umfassend Speichermittel (245), die so ausgelegt sind, dass sie eine vorausberechnete Folge von Blockgrößen für mindestens eines von einem vorbestimmten angenommenen Kanal und vorbestimmten angenommenen Kanalbedingungen speichern.

49. Steuervorrichtung nach Anspruch 47 oder 48, wobei die anschließende Blockgröße $N_n$ in einer n-ten Iteration eines iterativen Prozesses aus den Blockgrößen $N_1$, ..., $N_{n-1}$, die in den n-1 vorherigen Iterationen bestimmt wurden, aus einer vorbestimmten Verteilung P(SNR) des Signal-Rausch-Verhältnisses SNR, aus jeweiligen Wahrscheinlichkeiten $p_B(SNR, N_j)$, $j\in\{1, ..., n-1\}$ des Empfangens einer Angabe, dass ein Datenblock der Größe Nj in Anbetracht eines Signal-Rausch-Verhältnisses SNR nicht erfolgreich empfangen wurde, und aus der erwarteten Durchsatzrate R(SNR, N) in Abhängigkeit vom Signal-Rausch-Verhältnis SNR und der Blockgröße N bestimmt wird gemäß:

$$N_n = \underset{N}{\arg\max} \int_0^\infty P(SNR)\, R(SNR,N) \left( \prod_{j=1}^{n-1} p_B(SNR, N_j) \right) dSNR.$$

**50.** Steuervorrichtung nach Anspruch 48 oder 49, wobei das Speichermittel so ausgelegt ist, dass es mindestens zwei vorausberechnete Folgen von Blockgrößen speichert; wobei jede vorausberechnete Folge für mindestens eines von einem verschiedenen angenommenen Kanal und verschiedenen angenommenen Kanalbedingungen berechnet wird.

**51.** Steuervorrichtung nach einem der Ansprüche 47 bis 50, wobei die Folge von Blockgrößen weniger als 10 verschiedene Blockgrößen, vorzugsweise weniger als 7 und insbesondere zwischen 4 und 5 Blockgrößen umfasst.

**52.** Steuervorrichtung nach einem der Ansprüche 47 bis 51, wobei die Steuervorrichtung ferner so ausgelegt ist, dass sie die bestimmte Blockgröße während der Übertragung von anschließenden Datenblöcken durch Ausführen der folgenden Schritte anpasst:

    - Senden einer Anzahl von Datenblöcken mit jeweiligen aktuellen Blockgrößen, wobei jede aktuelle Blockgröße aus mindestens zwei zuvor bestimmten Kandidatenblockgrößen ausgewählt wird;
    - Bestimmen mindestens einer angepassten Kandidatenblockgröße aus einer Anzahl von Angaben, wobei jede Angabe angibt, ob ein entsprechender der gesendeten Datenblöcke erfolgreich empfangen wurde; und
    - Ersetzen mindestens einer der zuvor bestimmten Kandidatenblockgrößen durch die bestimmte mindestens eine angepasste Kandidatenblockgröße.

**53.** Steuervorrichtung nach Anspruch 52, wobei die mindestens zwei Kandidatenblockgrößen eine primäre Blockgröße und eine oder mehr alternative Blockgrößen umfassen; und wobei die Steuervorrichtung eine Auswahleinheit (226) umfasst, die so ausgelegt ist, dass sie die aktuelle Blockgröße so auswählt, dass sie häufiger gleich der primären Blockgröße als gleich jeder der einen oder der mehreren alternativen Blockgrößen ist.

**54.** Steuervorrichtung nach Anspruch 53, wobei die Auswahleinheit (226) so ausgelegt ist, dass sie aus jeweiligen erwarteten Durchsatzraten für die primäre Blockgröße und die eine oder die mehreren alternativen Blockgrößen eine relative Häufigkeit bestimmt, mit welcher die primäre Blockgröße in Bezug auf die eine oder die mehreren alternativen Blockgrößen ausgewählt wird.

**55.** Steuervorrichtung nach Anspruch 53 oder 54, umfassend eine Optimierungseinheit (225), die so ausgelegt ist, dass sie eine angepasste primäre Blockgröße aus der einen oder den mehreren Angaben bestimmt und eine oder mehrere angepasste alternative Blockgrößen aus der bestimmten angepassten primären Blockgröße bestimmt.

**56.** Steuervorrichtung nach Anspruch 55, ferner umfassend mindestens eine Ratenbewertungseinheit (222, 223, 224), die so ausgelegt ist, dass sie jeweilige effektive Durchsatzraten für die gesendeten Datenblöcke jeder der Kandidatenblockgrößen bestimmt; und wobei die Optimierungseinheit so ausgelegt ist, dass sie die angepasste primäre Blockgröße als eine der Kandidatenblockgrößen bestimmt, die der höchsten der bestimmten effektiven Durchsatzraten entspricht.

**57.** Steuervorrichtung nach Anspruch 56, wobei die mindestens eine Ratenbewertungseinheit so ausgelegt ist, dass sie jeweilige Blockfehlerraten für die gesendeten Datenblöcke jeder der Kandidatenblockgrößen aus den Angaben bestimmt und jeweilige Durchsatzraten aus den Blockfehlerraten und den entsprechenden Kandidatenblockgrößen bestimmt.

**58.** Steuervorrichtung nach einem der Ansprüche 53 bis 57, wobei die eine oder die mehreren alternativen Blockgrößen eine kleinste Blockgröße, die kleiner als die primäre Blockgröße ist, und eine größte Blockgröße umfassen, die größer als die primäre Blockgröße ist.

**59.** Steuervorrichtung nach Anspruch 58, wobei die Optimierungseinheit so ausgelegt ist, dass sie die mindestens zwei Kandidatenblockgrößen aus einer Folge von möglichen Blockgrößen bestimmt und die kleinste Blockgröße und die größte Blockgröße so auswählt, dass sie benachbarte Blockgrößen zur primären Blockgröße innerhalb der Folge sind.

**60.** Sendeeinheit, umfassend eine Steuervorrichtung nach einem der Ansprüche 31 bis 59.

**61.** Datenverarbeitungssystem, das so konfiguriert ist, dass es einen Teilsatz von Blockgrößen zur Verwendung bei einer Initialisierung eines Blockgrößenkontrollprozesses bestimmt, wobei das Datenverarbeitungssystem so konfiguriert ist, dass es den Teilsatz aus einer Folge von verfügbaren Blockgrößen bestimmt, und das Datenverarbeitungssystem Mittel umfasst, die zum Ausführen der Schritte des Verfahren nach Anspruch 17 ausgelegt sind.

**62.** Computerprogrammprodukt, umfassend Programmcodemittel, die so ausgelegt sind, dass die Schritte des Verfahrens nach Anspruch 17 bewirken, wenn das Programm auf einem Computer ausgeführt wird.

**Revendications**

**1.** Procédé de contrôle de la taille de bloc de blocs de données à transmettre d'un émetteur (101) à un récepteur (102) via une liaison de communication (103), le procédé comprenant de déterminer une taille de bloc ajustée (12) sur le base d'au moins une indication (111) indiquant si un bloc de données précédemment transmis avec une taille de bloc actuelle a été reçu avec succès par le récepteur, **caractérisé en ce que** la détermination de la taille de bloc ajustée comprend de :

- transmettre un nombre de blocs de données ayant des tailles de bloc actuelles respectives (112), dans lequel chaque taille de bloc actuelle est déterminées d'après au moins deux tailles de bloc candidates précédemment déterminées ($N_{mid}$, $N_{low}$, $N_{high}$) ;
- déterminer au moins une taille de bloc candidate ajustée d'après un nombre d'indications (111), chaque indication indiquant si un bloc de données correspondant des blocs de données transmis a été reçu avec succès par le récepteur ; et
- remplacer au moins une des tailles de bloc candidates précédemment déterminées par au moins une taille de bloc candidate ajustée déterminée.

**2.** Procédé selon la revendication 1, dans lequel au moins deux tailles de bloc candidates comprennent une taille de bloc primaire et une ou des tailles de bloc alternatives ; et dans lequel la taille de bloc actuelle est sélectionnée afin d'être égale à la taille de bloc primaire plus fréquemment qu'afin d'être égale à chacune de la ou des tailles de bloc alternatives.

**3.** Procédé selon la revendication 2, comprenant en outre de déterminer, d'après les débits de transmission escomptés respectifs pour la taille de bloc primaire et la ou les tailles de bloc alternatives, une fréquence relative avec laquelle la taille de bloc primaire est sélectionnée relativement à la ou les tailles de bloc alternatives.

**4.** Procédé selon les revendications 2 ou 3, dans lequel déterminer au moins une taille de bloc candidate ajustée comprend de

- déterminer une taille de bloc primaire ajustée d'après la ou les indications ; et
- déterminer une ou des tailles de bloc alternatives ajustées d'après la taille de bloc primaire ajustée déterminée.

**5.** Procédé selon la revendication 4, dans lequel déterminer la taille de bloc primaire ajustée comprend de

- déterminer des débits effectifs respectifs pour les blocs de données transmis de chacune des tailles de bloc candidates ; et
- déterminer la taille de bloc primaire ajustée comme une des tailles de bloc candidates qui correspond au plus haut des débits effectifs déterminés.

**6.** Procédé selon la revendication 5, dans lequel déterminer des débits effectifs respectifs comprend de :

- déterminer des taux d'erreur de bloc respectifs pour les blocs de données transmis de chacune des tailles de bloc candidates d'après lesdites indications ; et
- déterminer les débits respectifs d'après les taux d'erreur de bloc et les tailles de bloc candidates correspondantes.

**7.** Procédé selon une quelconque des revendications 2 à 6, dans lequel la ou les tailles de bloc alternatives comprend une taille de bloc la plus petite plus petite que la taille de bloc primaire et une taille de bloc la plus grande plus grande que la taille de bloc primaire.

**8.** Procédé selon la revendication 7, dans lequel les au moins deux tailles de bloc candidates sont déterminées d'après une séquence de tailles de bloc possibles ; et dans lequel la taille de bloc la plus petite et la taille de bloc la plus grande sont sélectionnées afin d'être des tailles de bloc adjacentes à la taille de bloc primaire à l'intérieur de ladite séquence.

**9.** Procédé selon une quelconque des revendications 1 à 8, comprenant en outre de déterminer une taille de bloc primaire initiale en

- transmettant un ou des blocs de données avec des tailles de bloc respectives sélectionnées dans une séquence prédéterminée de tailles de blocs jusqu'à ce qu'au moins un du ou des blocs de données soit reçu avec succès par le récepteur ; dans lequel une taille de données plus petite est sélectionnée dans ladite séquence pour la transmission d'un bloc de données subséquent en réponse à un bloc de données précédent du ou des blocs de données ayant été reçus avec succès par le récepteur ; et
- sélectionner la taille de bloc primaire initiale afin d'être la taille de bloc d'un bloc de données qui a été reçu avec succès par le récepteur.

**10.** Procédé selon la revendication 9, comprenant en outre de déterminer ladite séquence prédéterminée de tailles de blocs au moyen d'un processus itératif, dans lequel pendant chaque itération une taille de bloc subséquente est déterminée comme une taille de bloc qui maximise un débit à probabilité moyenne calculé d'après au moins une taille de bloc déterminée pendant au moins une itération précédente.

**11.** Procédé selon les revendications 9 ou 10, dans lequel la séquence de tailles de blocs est pré-calculée pour au moins un d'un canal postulé prédéterminé et de conditions de canal postulées prédéterminées.

**12.** Procédé selon les revendications 10 ou 11, dans lequel la taille de bloc subséquence $N_n$ dans la n-ème itération du processus itératif est déterminée d'après les tailles de blocs $N_1$, ..., $N_{n-1}$, déterminée dans les itérations précédentes n-1, d'après une distribution prédéterminée P(SNR) du rapport signal sur bruit SNR, d'après les probabilités respectives PB(SNR,Nj), $j \in \{1,..., n-1\}$ de réception d'une indication qu'un bloc de données de taille Nj n'a pas été reçu avec succès étant donné un rapport signal sur bruit SNR, et d'après le débit escompté E(SNR,N) comme une fonction d'un rapport signal sur bruit SNR et d'une taille de bloc N, conformément à

$$N_n = \underset{N}{\operatorname{argmax}} \int_0^\infty P(SNR)\,R(SNR,N)\left(\prod_{j=1}^{n-1} p_B(SNR,N_j)\right) dSNR\,.$$

**13.** Procédé selon les revendications 11 ou 12, comprenant de pré-calculer et mémoriser au moins deux séquences de tailles de bloc ; dans lequel chaque séquence pré-calculée est calculée pour au moins un d'un canal postulé différent et des conditions de canal postulées différentes.

**14.** Procédé selon une quelconque des revendications 9 à 13, dans lequel la séquence de tailles de blocs comprend moins de 10 tailles de bloc différentes, de préférence moins de 7, de manière encore préférée entre 4 et 5 tailles de bloc.

**15.** Procédé selon une quelconque des revendications 1 à 8, comprenant en outre de déterminer une taille de bloc primaire initiale en

- transmettant au moins un premier bloc de données avec une taille de bloc candidate initiale ;
- retransmettant au moins un bloc de données obtenu depuis au moins le premier bloc de données jusqu'à ce que au moins un bloc de données ait été reçu correctement par le récepteur ;
- déterminer la taille de bloc primaire initiale d'après une quantité indicative de la quantité de données transmises pendant les retransmissions.

**16.** Procédé selon la revendication 15, dans lequel la quantité indicative de la quantité de données transmises inclut au moins un du nombre de retransmissions et du nombre de bits transmis pendant les retransmissions.

**17.** Procédé de déterminer d'une taille de bloc adéquate de blocs de données à transmettre d'un émetteur (101) à un récepteur (102) via une liaison de communication (103), le procédé comprenant de

- transmettre (S403) un ou des blocs de données avec des tailles de bloc respectives ($N_{oi}$) sélectionnées dans une séquence prédéterminée de tailles de bloc (445) jusqu'à ce qu'au moins un du ou des blocs de données soit reçu avec succès par le récepteur ; dans lequel une taille de bloc plus petite est sélectionnée (S405) dans ladite séquence pour les transmissions d'un bloc de données subséquent en réponse (S404) à un bloc de données précédent du ou des blocs de données qui n'ont pas été reçus avec succès par le récepteur ; et
- sélectionner (S406) comme taille de bloc adéquate la taille de bloc d'un bloc de données qui a été reçu avec succès par le récepteur ;

**caractérisé en ce que** le procédé comprend en outre de

- déterminer (S401) ladite séquence prédéterminée de tailles de bloc au moyen d'un processus itératif, dans lequel pendant chaque itération une taille de bloc subséquente est déterminée comme une taille de bloc qui maximise un débit à probabilité moyenne calculé d'après au moins une taille de bloc déterminée pendant au moins une itération précédente.

**18.** Procédé selon la revendication 17, dans lequel la séquence de tailles de bloc est pré-calculée pour au moins un d'un canal postulé prédéterminé et des conditions de canal postulées prédéterminées.

**19.** Procédé selon les revendications 17 ou 18, dans lequel la taille de bloc subséquente $N_n$ dans la n-ème itération du processus itératif est déterminée d'après les tailles de bloc N1,...,Nn-1, déterminées dans les n-1 itérations précédentes, d'après une distribution prédéterminée P(SNR) du rapport signal sur bruit SNR, d'après les probabilités respectives pB(SNR, Nj), j∈{1, ..., n-1} de réception d'une indication qu'un bloc de données de taille $N_j$ n'a pas été reçu avec succès étant donné un rapport signal sur bruit SNR, et d'après le débit escompté E(SNR,N) comme une fonction d'un rapport signal sur bruit SNR et d'une taille de bloc N, conformément à

$$N_n = \underset{N}{\arg\max} \int_0^\infty P(SNR)R(SNR,N)\left(\prod_{j=1}^{n-1} p_B(SNR,N_j)\right) dSNR .$$

**20.** Procédé selon les revendications 18 ou 19, comprenant de pré-calculer et mémoriser au moins deux séquences de tailles de bloc ; dans lequel chaque séquence pré-calculée est calculée pour au moins un d'un canal postulé différent et des conditions de canal postulées différentes.

**21.** Procédé selon une quelconque des revendications 17 à 20, dans lequel la séquence de tailles de bloc comprend moins de 10 tailles de bloc différentes, de préférence moins de 7, de manière encore préférée entre 4 et 5 tailles de bloc.

**22.** Procédé selon une quelconque des revendications 17 à 21, dans lequel le remplacement d'au moins une des tailles de bloc candidates précédemment déterminées par au moins une taille de bloc candidate ajustée déterminée est conditionnée sur au moins une taille de bloc candidate ajustée déterminée, entraînant un débit estimé supérieur à au moins une des tailles de bloc candidates précédemment déterminées.

**23.** Procédé selon une quelconque des revendications 16 à 22, comprenant en outre d'ajuster la taille de bloc déterminée pendant la transmission de blocs de données subséquents en effectuant les étapes suivantes :

- transmettre un nombre de blocs de données ayant des tailles de bloc de données respectives, dans lequel chaque taille de bloc actuelle est sélectionnée dans au moins deux tailles de bloc candidates précédemment déterminées ;
- déterminer au moins une taille de bloc candidate ajustée d'après un nombre d'indications, chaque indication indiquant si un bloc de données correspondant des blocs de données transmis a été reçu avec succès par le récepteur ; et

- remplacer au moins unedes tailles de bloc candidates précédemment déterminées par au moins une taille de bloc candidate ajustée déterminée.

24. Procédé selon la revendication 23, dans lequel au moins deux tailles de bloc candidates comprennent une taille de bloc primaire et une ou des tailles de bloc alternatives ; et dans lequel la taille de bloc actuelle est sélectionnée afin d'être égale à la taille de bloc primaire plus fréquemment que égale à la ou les tailles de bloc alternatives.

25. Procédé selon la revendication 24, comprenant en outre de déterminer, d'après les débits escomptés respectifs pour la taille de bloc primaire et la ou les tailles de bloc alternatives, une fréquence relative avec laquelle la taille de bloc primaire est sélectionnée relativement à la ou les tailles de bloc alternatives.

26. Procédé selon les revendications 24 ou 25, dans lequel déterminer au moins une taille de bloc candidate ajustée comprend de déterminer une taille de bloc primaire ajustée d'après la ou les indications ; et déterminer une ou des tailles de bloc alternatives ajustées d'après la taille de bloc primaire ajustée déterminée.

27. Procédé selon la revendication 26, dans lequel déterminer la taille de bloc primaire ajustée comprend de déterminer les débits effectifs respectifs pour les blocs de données transmis de chacune des tailles de bloc candidates ; et déterminer la taille de bloc primaire ajustée comme une des tailles de bloc candidate qui correspond au plus haut des débits effectifs déterminés.

28. Procédé selon la revendication 27, dans lequel déterminer les débits effectifs respectifs comprend de déterminer les taux d'erreur de bloc respectifs pour les blocs de données transmis de chacune des tailles de bloc candidates d'après lesdites indications ; et déterminer les débits respectifs d'après les taux d'erreur de bloc et les tailles de bloc candidates correspondantes.

29. Procédé selon une quelconque des revendications 23 à 28, dans lequel la ou les tailles de bloc alternatives comprennent une taille de bloc la plus petite plus petite que la taille de bloc primaire et une taille de bloc la plus grande plus grande que la taille de bloc primaire.

30. Procédé selon la revendication 29, dans lequel les au moins deux tailles de bloc candidates sont déterminées d'après une séquence de tailles de bloc possibles ; et dans lequel la taille de bloc la plus petite et la taille de bloc la plus grande sont sélectionnées afin d'être des tailles de bloc adjacentes à la taille de bloc primaire à l'intérieur de ladite séquence.

31. Dispositif de contrôle (107) pour contrôler une taille de bloc de blocs de données à transmettre par une unité d'émetteur (101) à un récepteur (102) via une liaison de communication (103), dans lequel le dispositif de contrôle est adapté afin de déterminer une taille de bloc ajustée sur la base d'au moins une indication indiquant si un bloc de données précédemment transmis avec une taille de bloc actuelle a été reçu avec succès par le récepteur, **caractérisé en ce que** le dispositif de contrôle est en outre adapté afin de :

- amener l'unité d'émetteur à transmettre un nombre de blocs de données ayant des tailles de bloc actuelles respectives, dans lequel le moyen de contrôle est adapté afin de sélectionner chaque taille de bloc actuelle parmi au moins deux tailles de bloc candidates précédemment déterminées ;
- déterminer au moins une taille de bloc candidate ajustée d'après un nombre d'indications, chaque indication indiquant si un bloc de données correspondant des blocs de données transmis a été reçu avec succès par le récepteur, et
- remplacer au moins une des tailles de bloc candidates précédemment déterminées par au moins la taille de bloc candidate ajustée déterminée.

32. Dispositif de contrôle selon la revendication 31, dans lequel au moins deux tailles de bloc candidates comprennent une taille de bloc primaire et une ou des tailles de bloc alternatives ; et dans lequel le dispositif de contrôle comprend une unité de sélecteur (226) adaptée pour sélectionner la taille de bloc actuelle afin d'être égale à la taille de bloc primaire plus fréquemment qu'être égale à chacune de la ou des tailles de bloc alternatives.

33. Dispositif de contrôle selon la revendication 32, dans lequel l'unité de sélecteur (226) est adaptée pour déterminer, d'après les débits escomptés respectifs pour la taille de bloc primaire et la ou les tailles de bloc alternatives, une fréquence relative avec laquelle la taille de bloc primaire est sélectionnée relativement à la ou aux tailles de bloc alternatives.

**34.** Dispositif de contrôle selon les revendications 32 ou 33, comprenant une unité d'optimisateur (225) adaptée afin de déterminer une taille de bloc primaire ajustée d'après la ou les indications, et de déterminer des tailles de bloc alternatives d'après la taille de bloc primaire ajustée déterminée.

**35.** Dispositif de contrôle selon la revendication 34, comprenant au moins une unité d'évaluation de débit (222,223,224) adaptée afin de déterminer des débits effectifs respectifs pour les blocs de données transmis de chacune des tailles de bloc candidates ; et dans lequel l'unité d'optimisateur est adaptée afin de déterminer la taille de bloc primaire ajustée comme une des tailles de bloc candidates correspondant aux débits les plus hauts des débits effectifs déterminés.

**36.** Dispositif de contrôle selon la revendication 35, dans lequel au moins une unité d'évaluation de débit est adaptée afin de déterminer les taux d'erreur de bloc respectifs pour les blocs de données transmis de chacune des tailles de bloc candidates d'après les indications, et déterminer les débits respectifs d'après les taux d'erreur de bloc et les tailles de bloc candidates correspondantes.

**37.** Dispositif de contrôle selon une quelconque des revendications 32 à 36, dans lequel la ou les tailles de bloc alternatives comprennent une taille de bloc la plus petite plus petite que la taille de bloc primaire et une taille de bloc la plus grande plus grande que la taille de bloc primaire.

**38.** Dispositif de contrôle selon la revendication 37, adaptée afin de déterminer au moins deux tailles de bloc candidates d'après une séquence de tailles de bloc possibles, et de sélectionner la taille de bloc la plus petite et la taille de bloc la plus grande afin d'être des tailles de bloc adjacentes à la taille de bloc primaire à l'intérieur de ladite séquence.

**39.** Dispositif de contrôle selon une quelconque des revendications 31 à 38, comprenant en outre une unité d'initialisation (230) pour déterminer une taille de bloc primaire initiale, dans l'unité d'initialisation est adaptée pour

  - amener l'unité d'émetteur à émettre un ou des blocs de données avec des tailles de blocs respectives sélectionnées d'après une séquence prédéterminée de tailles de blocs jusqu'à ce qu'au moins un du ou des tailles de bloc soit successivement reçu par le récepteur ; dans lequel une taille de bloc plus petite est sélectionnée dans ladite séquence pour la transmission d'un bloc de données subséquent en réponse à un bloc de données précédent du ou des blocs de données n'ayant pas été reçus avec succès par le récepteur ; et
  - sélectionner la taille de bloc primaire initiale afin d'être la taille de bloc d'un bloc de données qui a été reçu avec succès par le récepteur.

**40.** Dispositif de contrôle selon la revendication 39, dans lequel l'unité d'initialisation est adaptée afin de déterminer ladite séquence prédéterminée de tailles de bloc au moyen d'un processus itératif, dans lequel pendant chaque itération une taille de bloc subséquente est déterminée comme une taille de bloc qui maximise un débit à probabilité moyenne calculé d'après au moins une taille de bloc déterminée pendant au moins une itération précédente.

**41.** Dispositif de contrôle selon les revendications 39 ou 40, comprenant un moyen de mémorisation (245) pour mémoriser une séquence pré-calculée de tailles de blocs pour au moins un d'un canal postulé prédéterminé et des conditions de canal postulées prédéterminées.

**42.** Dispositif de contrôle selon les revendications 40 ou 41, dans lequel la taille de bloc subséquence $N_n$ dans la n-ème itération du processus itératif est déterminée d'après les tailles de blocs $N1,...,Nn-1$, déterminée dans les itérations précédentes n-1, d'après une distribution prédéterminée P(SNR) du rapport signal sur bruit SNR, d'après les probabilités respectives pB(SNR,Nj), je{1,...,n-1} de réception d'une indication qu'un bloc de données de taille Nj n'a pas été reçu avec succès étant donné un rapport signal sur bruit SNR, et d'après le débit escompté E(SNR, N) comme une fonction d'un rapport signal sur bruit SNR et d'une taille de bloc N, conformément à

$$N_n = \underset{N}{\arg\max} \int_0^\infty P(SNR)\,R(SNR,N)\left(\prod_{j=1}^{n-1} p_B(SNR,N_j)\right) dSNR\,.$$

**43.** Dispositif de contrôle selon les revendications 41 ou 42, dans lequel le moyen de mémorisation (245) est adapté afin de mémoriser au moins deux séquences pré-calculées de tailles de bloc ; dans lequel chaque séquence pré-calculée est calculée pour au moins un d'un canal postulé différent et des conditions de canal postulées différentes.

**44.** Dispositif de commande selon une quelconque des revendications 39 à 43, dans lequel la séquence de tailles de bloc comprend moins de 10 tailles de bloc différentes, de préférence moins de 7, de manière encore préférée encore 4 et 5 tailles de bloc.

**45.** Dispositif de contrôle selon une quelconque des revendications 31 à 38, comprenant en outre une unité d'initialisation (230) adaptée afin de déterminer une taille de bloc primaire initiale en

- amenant l'unité d'émetteur à transmettre au moins un premier bloc de données avec une taille de bloc candidate initiale, et retransmettre au moins un bloc de données obtenu depuis au moins le premier bloc de données jusqu'à ce que au moins un bloc de données ait été correctement reçu par le récepteur ;
- déterminer la taille de bloc primaire initiale d'après une quantité indicative de la quantité de données transmise pendant les retransmissions.

**46.** Dispositif de contrôle selon la revendication 45, dans lequel la quantité indicative de la quantité de données transmises inclut au moins le nombre de retransmissions et le nombre de bits transmis pendant les retransmissions.

**47.** Dispositif de contrôle (107) pour contrôler une taille de bloc de blocs de données à transmettre par une unité d'émetteur (101) vers un récepteur (102) via une liaison de communications (103), le dispositif de contrôle comprenant une unité d'initialisation (230) pour déterminer une taille de bloc adéquate, et un moyen de mémorisation (241,441) pour mémoriser une séquence de tailles de bloc disponibles, dans lequel le dispositif de contrôle est adapté afin de

- amener l'unité d'émetteur à émettre un ou des blocs de données avec des tailles de bloc respectives sélectionnées dans une séquence de tailles de bloc jusqu'à ce que au moins un du ou des blocs de données est reçu avec succès par le récepteur ; dans lequel l'unité d'initialisation est adaptée afin de sélectionner une taille de bloc plus petite en réponse à ladite séquence pour la transmission d'un bloc de données subséquent en réponse à un bloc de données précédent du ou des blocs de données n'ayant pas été reçus avec succès par le récepteur, et
- sélectionner comme taille de bloc adéquate la taille de bloc d'un bloc de données qui a été reçu avec succès par le récepteur ;

**caractérisé en ce que** l'unité d'initialisation est adaptée afin de sélectionner lesdites tailles de bloc plus petites respectives dans un sous-ensemble prédéterminé de ladite séquence mémorisée de tailles de bloc, dans lequel chaque taille de bloc plus petite est déterminée comme une taille de bloc qui maximise un débit à probabilité moyenne calculé d'après une taille de bloc précédente dudit sous-ensemble.

**48.** Dispositif de contrôle selon la revendication 47, comprenant un moyen de mémorisation (245) adaptée afin de mémoriser une séquence pré-calculée de tailles de bloc pour au moins un du canal postulé prédéterminé et des conditions de canal postulées prédéterminées.

**49.** Dispositif de contrôle selon les revendications 47 ou 48, dans lequel la taille de bloc subséquente $N_n$ est déterminée dans un n-ème itération d'un processus itératif d'après les tailles de blocs N1,...,Nn-1, déterminée dans les itérations précédentes n-1, d'après une distribution prédéterminée P(SNR) du rapport signal sur bruit SNR, d'après les probabilités respectives pB(SNR,Nj), j∈{1,...,n-1} de réception d'une indication qu'un bloc de données de taille Nj n'a pas été reçu avec succès étant donné un rapport signal sur bruit SNR, et d'après le débit escompté E(SNR,N) comme une fonction d'un rapport signal sur bruit SNR et d'une taille de bloc N, conformément à

$$N_n = \operatorname*{argmax}_N \int_0^\infty P(SNR) R(SNR, N) \left( \prod_{j=1}^{n-1} p_B(SNR, N_j) \right) dSNR .$$

**50.** Dispositif de contrôle selon les revendications 48 ou 49, dans lequel le moyen de mémorisation est adapté afin de mémoriser au moins deux séquences pré-calculées de tailles de bloc ; dans lequel chaque séquence pré-calculée est calculée pour au moins un d'un canal postulé différent et de conditions de canal postulées différentes.

**51.** Dispositif de contrôle selon une quelconque des revendications 47 à 50, dans lequel la séquence de tailles de bloc comprend moins de 10 tailles de bloc différentes, de préférence moins de 7, de manière encore préférable entre 4 et 5 tailles de bloc.

**52.** Dispositif de contrôle selon une quelconque des revendications 47 à 51, dans lequel le dispositif de contrôle est en outre adapté afin d'ajuster la taille de bloc déterminée pendant la transmission de blocs de données subséquents en effectuant les étapes suivantes ;

- transmettre un nombre de blocs de données ayant des tailles de bloc actuelles respectives, dans lequel chaque taille de bloc actuelle est sélectionnée dans au moins deux tailles de bloc candidates précédemment déterminées ;
- déterminer au moins une taille de bloc candidate ajustée d'après un nombre d'indications, chaque indication indiquant si un bloc de données correspondant des blocs de données transmis a été reçu avec succès ; et
- remplacer au moins une des tailles de bloc candidates déterminées par au moins une taille de bloc candidate ajustée déterminée.

**53.** Dispositif de contrôle selon la revendication 52, dans lequel au moins deux tailles de bloc candidates comprennent une taille de bloc primaire et une ou des tailles de bloc alternatives ; et dans lequel le dispositif de commande comprend une unité de sélecteur (226) adaptée pour sélectionner la taille de bloc actuelle afin d'être égale à la taille de bloc primaire plus fréquemment qu'égale à chacune de la ou des tailles de bloc alternatives.

**54.** Dispositif de contrôle selon la revendication 53, dans lequel l'unité de sélecteur (226) est adaptée afin de déterminer, d'après les débits escomptés respectifs pour la taille de bloc primaire et la ou les taillesde bloc alternatives, une fréquence relative avec laquelle la taille de bloc primaire est sélectionnée relativement à la ou les tailles de bloc alternatives.

**55.** Dispositif de contrôle selon les revendications 53 ou 54, comprenant une unité d'optimisateur (225) adaptée afin de déterminer une taille de bloc primaire ajustée d'après la ou les indications, et déterminer une ou des tailles de bloc alternatives ajustées d'après la taille de bloc primaire ajustée déterminée.

**56.** Dispositif de contrôle selon la revendication 55, comprenant en outre au moins une unité d'évaluation de débit (222,223,224) adaptée afin de déterminer des débits effectifs respectifs pour les blocs de données transmis de chacune des tailles de bloc candidates ; et dans lequel l'unité d'optimisateur est adaptée afin de déterminer la taille de bloc primaire ajustée comme une des tailles de bloc candidates correspondant au débit le plus haut des débits effectifs déterminés.

**57.** Dispositif de contrôle selon la revendication 56, dans lequel au moins une unité d'évaluation de débit est adaptée afin de déterminer les tailles de bloc respectives pour les blocs de données transmis de chacune des tailles de bloc candidates d'après les indications, et déterminer les débits respectifs d'après les taux d'erreur de bloc et les tailles de bloc candidates.

**58.** Dispositif de contrôle selon une quelconque des revendications 53 à 57, dans lequel la ou les tailles de bloc alternatives comprennent une taille de bloc la plus petite plus petite que la taille de bloc primaire et une taille de bloc la plus grande plus grande que la taille de bloc primaire.

**59.** Dispositif de contrôle selon la revendication 58, dans lequel l'unité d'optimisateur est adaptée afin de déterminer au moins deux tailles de bloc candidates d'après une séquence de tailles de bloc possibles, et sélectionner la taille de bloc la plus petite et la taille de bloc la plus grande afin d'être des tailles de bloc adjacentes à la taille de bloc primaire à l'intérieur de ladite séquence.

**60.** Unité d'émetteur comprenant un dispositif de contrôle selon une quelconque des revendications 31 à 59.

**61.** Système de traitement de données configuré afin de déterminer un sous-ensemble de tailles de bloc à utiliser lors d'une initialisation d'un processus de contrôle de la taille de bloc, le système de traitement de données étant configuré afin de déterminer ledit sous-ensemble d'après une séquence de tailles de bloc disponibles, le système de traitement de données comprenant des moyens adaptés pour mettre en oeuvre les étapes du procédé selon la revendication 17.

**62.** Produit de programme informatique comprenant des moyens de code de programme adaptés afin de provoquer les étapes du procédé selon la revendication 17 quand ledit programme est exécuté sur un ordinateur.

FIG. 1

FIG. 2

FIG. 3

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3878333 A

- US 20020089935 A

**Non-patent literature cited in the description**

- **JOAQUIM ARNALDO C. MARTINS ; JORGE DE CARVALHO ALVES.** *IEEE Transactions on Communications,* June 1990, vol. 38 (6